(19) **Europäisches Patentamt / European Patent Office / Office européen des brevets**

(11) **EP 4 764 902 A1**

(12) **EUROPEAN PATENT APPLICATION**

(43) Date of publication:
**24.06.2026 Bulletin 2026/26**

(21) Application number: **25218278.7**

(22) Date of filing: **25.11.2025**

(51) International Patent Classification (IPC):
**G06F 17/16** (2006.01) **G06N 3/063** (2023.01)

(52) Cooperative Patent Classification (CPC):
**G06F 17/16; G06N 3/045; G06N 3/0464; G06N 3/0495; G06N 3/063**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **29.11.2024 GB 202417598**
**29.11.2024 GB 202417599**
**01.08.2025 GB 202512577**
**01.08.2025 GB 202512579**

(71) Applicant: **Imagination Technologies Limited**
**Kings Langley, Hertfordshire WD4 8LZ (GB)**

(72) Inventors:
• **Demirci, Gunduz Vehbi**
**Kings Langley, WD4 8LZ (GB)**
• **Atherton, Timothy**
**Kings Langley, WD4 8LZ (GB)**

(74) Representative: **Slingsby Partners LLP**
**1 Kingsway**
**London WC2B 6AN (GB)**

(54) **MULTIPLICATION OF A SPARSE MATRIX AND A DENSE MATRIX TO DETERMINE AN OUTPUT MATRIX ON A PROCESSING UNIT**

(57) A processing unit and method are provided for multiplying a sparse matrix and a dense matrix to determine an output matrix. An execution module executes threads of a workgroup, wherein the threads of the workgroup are allocated to respective sections of the output matrix. Each of the sections is a portion of a row of the output matrix. A cache stores portions of rows of the dense matrix. The sparse matrix comprises a plurality of non-zero elements and a plurality of elements which are zero, wherein the rows and columns of the sparse matrix are ordered so as to gather the plurality of non-zero elements of the sparse matrix into a set of sub-matrices, the set of sub-matrices having a greater average density of non-zero elements than the sparse matrix. The rows and columns of the dense matrix and the output matrix are ordered in accordance with the ordering of the rows and columns of the sparse matrix. Each of the threads of the workgroup is arranged to: (i) access data representing one or more non-zero elements of a corresponding row of the sparse matrix, wherein a row-position of the corresponding row of the sparse matrix matches a row-position of the portion of the row of the output matrix of the section to which the thread is allocated, (ii) for each of the one or more non-zero elements of the corresponding row of the sparse matrix: access from the cache a portion of a related row of the dense matrix, and multiply the non-zero element with the portion of the related row of the dense matrix, wherein a row-position of the related row in the dense matrix matches a column-position of the non-zero element in the sparse matrix, and wherein a column-position of the portion of the related row of the dense matrix matches a column-position of the portion of the row of the output matrix of the section to which the thread is allocated, and (iv) sum results of the multiplications to determine the elements of the section of the output matrix to which the thread is allocated.

FIGURE 5

**Description**

CROSS-REFERENCE TO RELATED APPLICATION

This application claims priority from UK patent applications 2417598.6 and 2417599.4 filed on 29 November 2024, and from UK patent applications 2512577.4 and 2512579.0 filed on 1 August 2025, which are herein incorporated by reference in their entirety.

TECHNICAL FIELD

The present disclosure is directed to efficiently implementing multiplication of a sparse matrix and a dense matrix to determine an output matrix on a processing unit.

BACKGROUND

Matrix multiplication is a common operation that is performed by computer processing systems and may be implemented in a variety of different applications. For example, matrix multiplication is used in neural networks, e.g. as part of implementing a fully connected layer or a convolution layer within a neural network. For example, implementing a fully connected layer within a neural network involves multiplying a weight matrix and an activation matrix together, e.g. where often the weight matrix is a sparse matrix and the activation matrix is a dense matrix, such that the multiplication is a multiplication of a sparse matrix and a dense matrix. Matrix multiplications can be implemented by any suitable processing unit, such as a Central Processing Unit (CPU), a Graphics Processing Unit (GPU), a Neural Network Accelerator (NNA), or a Digital Signal Processor (DSP), and for any suitable purpose. A matrix may be considered "sparse" if a majority of its elements are zero, i.e. if a majority of the elements of the matrix have a value of zero. For example, significantly less than half (e.g. less than 5% or less than 10%) of the elements of a sparse matrix may be non-zero. A matrix may be considered "dense" if a majority of its elements are non-zero, i.e. if a majority of the elements of the matrix have a non-zero value.

It is beneficial for a processing unit, within a processing system, to be able to efficiently implement a matrix multiplication. The 'efficiency' may be in terms of a reduced processing latency (i.e. improved performance), a reduced power consumption, a reduced silicon area and/or a reduced memory bandwidth of the processing unit. Here the term "memory bandwidth" is used to refer to the amount of data that is transferred to and from a memory in the processing system.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

There is provided a processing unit configured to multiply a sparse matrix and a dense matrix to determine an output matrix, wherein the processing unit comprises:

an execution module configured to execute threads of a workgroup, wherein the threads of the workgroup are allocated to respective sections of the output matrix, wherein each of the sections is a portion of a row of the output matrix; and

a cache configured to store portions of rows of the dense matrix;

wherein the sparse matrix comprises a plurality of non-zero elements and a plurality of elements which are zero, wherein the rows and columns of the sparse matrix are ordered so as to gather the plurality of non-zero elements of the sparse matrix into a set of sub-matrices, the set of sub-matrices having a greater average density of non-zero elements than the sparse matrix, wherein the rows and columns of the dense matrix and the output matrix are ordered in accordance with the ordering of the rows and columns of the sparse matrix,

wherein each of the threads of the workgroup is arranged to:

access data representing one or more non-zero elements of a corresponding row of the sparse matrix, wherein a row-position of the corresponding row of the sparse matrix matches a row-position of the portion of the row of the output matrix of the section to which the thread is allocated;

for each of the one or more non-zero elements of the corresponding row of the sparse matrix:

access from the cache a portion of a related row of the dense matrix; and

multiply the non-zero element with the portion of the related row of the dense matrix, wherein a row-position of the related row in the dense matrix matches a column-position of the non-zero element in the sparse matrix, and wherein a column-position of the portion of the related row of the dense matrix matches a column-position of the portion of the row of the output matrix of the section to which the thread is allocated; and

sum results of the multiplications to determine the elements of the section of the output matrix to which the thread is allocated.

The sparse matrix may be divided into slices, where each of the slices represents a set of N rows of the sparse matrix, where N is an integer. The data of the sparse matrix may be in a sellpack format comprising: a string of values and a string of column indices corresponding to the values, wherein the string of values comprises the non-zero elements of the sparse matrix. For each of the slices, a section of the string of values may comprise the non-zero elements of the slice of the sparse matrix in column-major order, and a section of the string of column indices may comprise column indices corresponding to the non-zero elements of the slice of the sparse matrix in column-major order. Each of the slices of the sparse matrix in the sellpack format may correspond to the rows of a respective one of the sub-matrices.

The data of the sparse matrix in the sellpack format may further comprise a set of slice offsets to indicate the positions of the sections within the string of values and within the string of column indices that relate to the respective slices.

The rows and columns of the sparse matrix may be ordered into a singly-bordered block-diagonal matrix form.

The rows and columns of the sparse matrix may be ordered so as to gather the plurality of non-zero elements of the sparse matrix into a set of sub-matrices in dependence on a hypergraph model.

The processing unit may comprise a set of one or more caches configured to store data of the sparse matrix. Each of the threads of the workgroup may be arranged to access the data representing the one or more non-zero elements of a corresponding row of the sparse matrix from the set of one or more caches.

Sequential threads of the workgroup may be arranged to access data representing non-zero elements of the sparse matrix from sequential locations of the set of one or more caches.

The cache that is configured to store portions of rows of the dense matrix may be separate to the set of one or more caches configured to store data of the sparse matrix. The processing unit may be configured such that data of the sparse matrix is not stored in the cache that is configured to store portions of rows of the dense matrix, and data of the dense matrix is not stored in the set of one or more caches configured to store data of the sparse matrix.

Multiple threads of the workgroup may be allocated to respective portions of the same row of the output matrix.

The workgroup may comprise multiple warps. Each of the warps may comprise a plurality of the threads allocated to portions of different rows of the output matrix. For each of a plurality of the rows of the output matrix, threads of different warps may be allocated to respective portions of that row of the output matrix.

Each of the threads of the workgroup may be arranged to, for each of the one or more non-zero elements of the corresponding row of the sparse matrix, multiply the non-zero element with a portion of the related row of the dense matrix using a vectorised operation to simultaneously multiply the non-zero element with a vector having elements of the portion of the related row of the dense matrix, such that the results of the multiplications are vectors.

Each of the threads of the workgroup may be arranged to perform element-wise addition of the results of the multiplications to sum the results of the multiplications to determine the elements of the section of the output matrix to which the thread is allocated.

The sections of the output matrix to which the threads of the workgroup are allocated may be non-overlapping and contiguous.

The processing unit may be a graphics processing unit.

The cache that is configured to store portions of rows of the dense matrix may be a texture cache. The texture cache may be configured to allow access to elements of a group of adjacent elements of a portion of a row of the dense matrix together.

The texture cache may be configured to allow random access to groups of adjacent elements of rows of the dense matrix.

The execution module may comprise a plurality of registers. Each of the threads of the workgroup may be arranged to, for multiplying each of the one or more non-zero elements of the corresponding row of the sparse matrix with a portion of the related row of the dense matrix, store data representing the non-zero element of the corresponding row of the sparse matrix in a first set of one or more of the registers, and store data representing the portion of the related row of the dense matrix in a second set of one or more of the registers.

The number of threads in the workgroup may be equal to the number of threads that can be executed simultaneously on the execution module.

There is provided a computer-implemented method of multiplying a sparse matrix and a dense matrix on a processing unit to determine an output matrix, wherein the processing unit comprises an execution module and a cache, wherein the method comprises:

executing threads of a workgroup on the execution module, wherein the threads of the workgroup are allocated to respective sections of the output matrix, wherein each of the sections is a portion of a row of the output matrix;

wherein, for each of the threads of the workgroup, said executing the thread comprises:

accessing data representing one or more non-zero elements of a corresponding row of the sparse matrix, wherein a row-position of the corresponding row of the sparse matrix matches a row-position of the portion of the row of the output matrix of the section to which the thread is allocated, wherein the sparse matrix comprises a plurality of non-zero elements and a plurality of elements which are zero, wherein the rows and columns of the sparse matrix are ordered so as to gather the plurality of non-zero elements of the sparse matrix into a set of sub-matrices, the set of sub-matrices having a greater average density of non-zero elements than the sparse matrix, wherein the rows and columns of the dense matrix and the output matrix are ordered in accordance with the ordering of the rows and columns of the sparse matrix;

for each of the one or more non-zero elements of the corresponding row of the sparse matrix:

accessing from the cache a portion of a related row of the dense matrix; and

multiplying the non-zero element with the portion of the related row of the dense matrix, wherein a row-position of the related row in the dense matrix matches a column-position of the non-zero element in the sparse matrix, and wherein a column-position of the portion of the related row of the dense matrix matches a column-position of the portion of the row of the output matrix of the section to which the thread is allocated; and

summing results of the multiplications to determine the elements of the section of the output matrix to which the thread is allocated.

The sparse matrix may be divided into slices. Each of the slices may represent a set of N rows of the sparse matrix, where N is an integer. The data of the sparse matrix may be in a sellpack format comprising: a string of values and a string of column indices corresponding to the values, wherein the string of values comprises the non-zero elements of the sparse matrix. For each of the slices, a section of the string of values may comprise the non-zero elements of the slice of the sparse matrix in column-major order, and a section of the string of column indices may comprise column indices corresponding to the non-zero elements of the slice of the sparse matrix in column-major order. Each of the slices of the sparse matrix in the sellpack format may correspond to the rows of a respective one of the sub-matrices.

Multiple threads of the workgroup may be allocated to respective portions of the same row of the output matrix.

The processing unit may be a graphics processing unit. The cache may be a texture cache configured to store portions of rows of the dense matrix. The texture cache may be configured to allow access to elements of a group of adjacent elements of a portion of a row of the dense matrix together.

There may be provided a method of manufacturing, using an integrated circuit manufacturing system, a processing unit as described herein.

There may be provided computer readable code configured to cause any of the methods described herein to be performed when the code is run.

There may be provided an integrated circuit definition dataset that, when processed in an integrated circuit manufacturing system, configures the integrated circuit manufacturing system to manufacture a processing unit as described herein.

There may be provided a graphics processing unit configured to multiply a sparse matrix and a dense matrix to determine an output matrix, wherein the graphics processing unit comprises:

an execution module configured to execute threads of a workgroup, wherein the threads of the workgroup are allocated to respective sections of the output matrix, wherein each of the sections is a portion of a row of the output matrix; and

a texture cache configured to store portions of rows of the dense matrix, wherein the texture cache is configured to allow access to elements of a group of adjacent elements of a portion of a row of the dense matrix together;

wherein each of the threads of the workgroup is arranged to:

access data representing one or more non-zero elements of a corresponding row of the sparse matrix, wherein a row-position of the corresponding row of the sparse matrix matches a row-position of the portion of the row of the output matrix of the section to which the thread is allocated;

for each of the one or more non-zero elements of the corresponding row of the sparse matrix:

access from the texture cache a portion of a related row of the dense matrix; and

multiply the non-zero element with the portion of the related row of the dense matrix, wherein a row-position of the related row in the dense matrix matches a column-position of the non-zero element in the sparse matrix, and wherein a column-position of the portion of the related row of the dense matrix matches a column-position of the portion of the row of the output matrix of the section to which the thread is allocated; and

sum results of the multiplications to determine the elements of the section of the output matrix to which the thread is allocated.

There may be provided a computer-implemented method of multiplying a sparse matrix and a dense matrix on a graphics processing unit to determine an output matrix, wherein the graphics processing unit comprises an execution module and a texture cache, wherein the method comprises:

executing threads of a workgroup on the execution module, wherein the threads of the workgroup are allocated to respective sections of the output matrix, wherein each of the sections is a portion of a row of the output matrix;

wherein, for each of the threads of the workgroup, said executing the thread comprises:

accessing data representing one or more non-zero elements of a corresponding row of the sparse matrix, wherein a row-position of the corresponding row of the sparse matrix matches a row-position of the portion of the row of the output matrix of the section to which the thread is allocated;

for each of the one or more non-zero elements of the corresponding row of the sparse matrix:

accessing from the texture cache a portion of a related row of the dense matrix, wherein the texture cache is configured to allow access to elements of a group of adjacent elements of a portion of a row of the dense matrix together; and

multiplying the non-zero element with the portion of the related row of the dense matrix, wherein a row-position of the related row in the dense matrix matches a column-position of the non-zero element in the sparse matrix, and wherein a column-position of the portion of the related row of the dense matrix matches a column-position of the portion of the row of the output matrix of the section to which the thread is allocated; and

summing results of the multiplications to determine the elements of the section of the output matrix to which the thread is allocated.

There may be provided a processing unit configured to multiply a sparse matrix and a dense matrix to determine an output matrix, wherein the processing unit comprises:

an execution module configured to execute threads of a workgroup, wherein the execution module comprises a plurality of registers, wherein the threads of the workgroup are allocated to respective sections of the output matrix, wherein each of the sections is a portion of a row of the output matrix;

wherein each of the threads of the workgroup is arranged to:

access data from a first set of one or more of the registers representing one or more non-zero elements of a corresponding row of the sparse matrix, wherein a row-position of the corresponding row of the sparse matrix matches a row-position of the portion of the row of the output matrix of the section to which the thread is allocated;

for each of the one or more non-zero elements of the corresponding row of the sparse matrix:

access from a second set of one or more of the registers a portion of a related row of the dense matrix; and

multiply the non-zero element with the portion of the related row of the dense matrix, wherein a row-position of the related row in the dense matrix matches a column-position of the non-zero element in the sparse matrix, and wherein a column-position of the portion of the related row of the dense matrix matches a column-position of the portion of the row of the output matrix of the section to which the thread is allocated; and

sum results of the multiplications to determine the elements of the section of the output matrix to which the thread is allocated.

There may be provided a computer-implemented method of multiplying a sparse matrix and a dense matrix on a processing unit to determine an output matrix, wherein the processing unit comprises an execution module which comprises a plurality of registers, wherein the method comprises:

executing threads of a workgroup on the execution module, wherein the threads of the workgroup are allocated to respective sections of the output matrix, wherein each of the sections is a portion of a row of the output matrix;

wherein, for each of the threads of the workgroup, said executing the thread comprises:

accessing data from a first set of one or more of the registers representing one or more non-zero elements of a corresponding row of the sparse matrix, wherein a row-position of the corresponding row of the sparse matrix matches a row-position of the portion of the row of the output matrix of the section to which the thread is allocated;

for each of the one or more non-zero elements of the corresponding row of the sparse matrix:

accessing from a second set of one or more of the registers a portion of a related row of the dense matrix; and

multiplying the non-zero element with the portion of the related row of the dense matrix, wherein a row-position of the related row in the dense matrix matches a column-position of the non-zero element in the sparse matrix, and wherein a column-position of the portion of the related row of the dense matrix matches a column-position of the portion of the row of the output matrix of the section to which the thread is allocated; and

summing results of the multiplications to determine the elements of the section of the output matrix to which the thread is allocated.

There may be provided a processing unit configured to multiply a sparse matrix and a dense matrix to determine an output matrix, wherein the processing unit comprises:

an execution module configured to execute threads of a workgroup, wherein the threads of the workgroup are allocated to respective sections of the output matrix, wherein each of the sections is a portion of a row of the output matrix; and

a set of one or more caches configured to store data of the sparse matrix;

wherein each of the threads of the workgroup is arranged to:

access data from the set of one or more caches representing one or more non-zero elements of a corresponding row of the sparse matrix, wherein a row-position of the corresponding row of the sparse matrix matches a row-position of the portion of the row of the output matrix of the section to which the thread is allocated;

for each of the one or more non-zero elements of the corresponding row of the sparse matrix, multiply the non-zero element with a portion of a related row of the dense matrix, wherein a row-position of the related row in the dense matrix matches a column-position of the non-zero element in the sparse matrix, and wherein a column-position of the portion of the related row of the dense matrix matches a column-position of the portion of the row of the output matrix of the section to which the thread is allocated; and

sum results of the multiplications to determine the elements of the section of the output matrix to which the thread is allocated;

wherein multiple threads of the workgroup are allocated to respective portions of the same row of the output matrix.

Each portion of a row of the output matrix may comprise a plurality of elements of the row of the output matrix.

There may be provided a computer-implemented method of multiplying a sparse matrix and a dense matrix on a processing unit to determine an output matrix, wherein the processing unit comprises an execution module and a set of one or more caches, wherein the method comprises:

executing threads of a workgroup on the execution module, wherein the threads of the workgroup are allocated to respective sections of the output matrix, wherein each of the sections is a portion of a row of the output matrix;

wherein, for each of the threads of the workgroup, said executing the thread comprises:

accessing data from the set of one or more caches representing one or more non-zero elements of a corresponding row of the sparse matrix, wherein a row-position of the corresponding row of the sparse matrix matches a row-position of the portion of the row of the output matrix of the section to which the thread is allocated;

for each of the one or more non-zero elements of the corresponding row of the sparse matrix, multiplying the non-zero element with a portion of a related row of the dense matrix, wherein a row-position of the related row in the dense matrix matches a column-position of the non-zero element in the sparse matrix, and wherein a column-position of the portion of the related row of the dense matrix matches a column-position of the portion of the row of the output matrix of the section to which the thread is allocated; and

summing results of the multiplications to determine the elements of the section of the output matrix to which the thread is allocated;

wherein multiple threads of the workgroup are allocated to respective portions of the same row of the output matrix.

The processing unit may be embodied in hardware on an integrated circuit. There may be provided a method of manufacturing, at an integrated circuit manufacturing system, a processing unit. There may be provided an integrated circuit definition dataset that, when processed in an integrated circuit manufacturing system, configures the system to manufacture a processing unit. There may be provided a non-transitory computer readable storage medium having stored thereon a computer readable description of a processing unit that, when processed in an integrated circuit manufacturing system, causes the integrated circuit manufacturing system to manufacture an integrated circuit embodying a processing unit.

There may be provided an integrated circuit manufacturing system comprising: a non-transitory computer readable storage medium having stored thereon a computer readable description of the processing unit; a layout processing system configured to process the computer readable description so as to generate a circuit layout description of an integrated circuit embodying the processing unit; and an integrated circuit generation system configured to manufacture the processing unit according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

Figure 1 shows a processing system;

Figure 2 illustrates a matrix multiplication;

Figure 3 illustrates a matrix multiplication of a sparse matrix and a dense matrix;

Figure 4 is a flow chart for a method of multiplying a sparse matrix and a dense matrix on a processing unit to determine an output matrix;

Figure 5 illustrates how threads can be allocated to respective sections of an output matrix for implementing a matrix multiplication of a sparse matrix and a dense matrix;

Figure 6 shows the data of the sparse matrix in a sellpack format;

Figure 7A shows threads being associated with rows of a slice of the sparse matrix;

Figure 7B shows the threads being associated with rows of the dense matrix;

Figure 7C shows the column indices of the slice of the sparse matrix in a condensed form;

Figure 7D shows the values of the slice of the sparse matrix in a condensed form;

Figure 7E shows a string of column indices and a string of values for the slice of the sparse matrix in the sellpack format;

Figure 8 shows an example of a multiplication of larger matrices, indicating which portions of the output matrix, the sparse matrix and the dense matrix are associated with different threads of a workgroup;

Figure 9 shows a graphics processing system which may implement the matrix multiplications described herein;

Figure 10A shows an example of a sparse matrix comprising a plurality of elements representative of non-zero values and a plurality of elements representative of zero values;

Figure 10B shows an example hypergraph model corresponding to the sparse matrix shown in Figure 10A;

Figure 10C shows an example rearranged sparse matrix comprising a plurality of sub-matrices;

Figure 11A shows a second example of sparse matrix whose rows and columns are ordered so as to gather the non-zero elements into a set of sub-matrices;

Figure 11B shows the values of the sparse matrix of Figure 11A in a condensed form;

Figure 11C shows the column indices of the sparse matrix of Figure 11A in a condensed form;

Figure 11D shows the data of the sparse matrix of Figure 11A in the sellpack format;

Figure 12 shows a computer system in which a processing unit is implemented; and

Figure 13 shows an integrated circuit manufacturing system for generating an integrated circuit embodying a processing unit.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

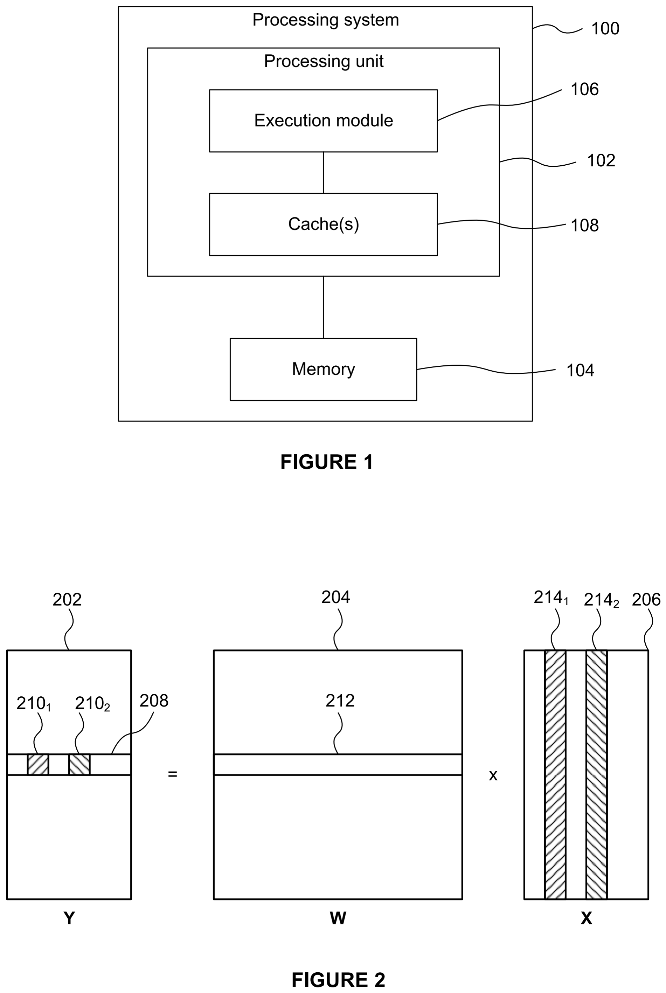

Figure 1 shows a processing system 100 which comprises a processing unit 102 and a memory 104. The processing unit 102 could be any type of processing unit, such as a Central Processing Unit (CPU), a Graphics Processing Unit (GPU), a Neural Network Accelerator (NNA), or a Digital Signal Processor (DSP). The processing unit 102 comprises at least one execution module 106 and at least one cache 108. In many practical implementations, the processing unit 102 comprises multiple execution modules and multiple caches. The execution module 106 is configured to perform computing operations. In particular, the processing unit 102 is configured to perform parallel processing to carry out work that is arranged into "workgroups", "warps" and "threads". A "thread" is an operation or sequence of operations to be performed with respect to particular input data by an execution module. For example, one or more threads may be allocated to a row of a matrix to be multiplied. A warp may comprise a plurality of threads (e.g. 64 or 128 threads to give two examples), where that plurality of threads can be processed in parallel by an execution module. Generally, threads within a warp are executed in lockstep with one another. A workgroup may comprise one or more warps. Separate warps and/or workgroups may run concurrently with one another; however, the threads of different warps and/or workgroups do not have to (and likely will not) run in lockstep. In examples where a workgroup comprises more than one warp, each of those warps can be processed in any order (e.g. in series, in parallel or in an interleaved manner) at a single execution module 106 of the processing unit 102. The threads within a workgroup are executed by the same execution module. Separate workgroups may be processed independently of each other (e.g. at different execution modules of the processing unit, or in series at a single execution module of the processing unit). Threads within the same workgroup (e.g. threads within the same warp of a workgroup, and threads within different warps of the same workgroup) are able to share access during their processing to memory dedicated to the execution module or processing unit processing those threads (e.g. a local memory or cache).

A warp may be arranged as an array of threads (e.g., a one-dimensional, two-dimensional or three-dimensional array of threads). The number of threads comprised by a warp may be limited, and/or pre-determined. The number of threads comprised by a warp may be limited by a hardware restriction, e.g., a limit on how many threads can be processed in lockstep on the available processing hardware. In an example, a warp may comprise up to 128 threads. In this example, if more than 128 threads are to perform the same operation, then more than one warp will be associated with that operation. For example, if 2048 threads are to perform the same operation, then sixteen warps may be associated with that operation. Said sixteen warps may be comprised within the same workgroup or may be divided between a plurality of workgroups (e.g., up to sixteen different workgroups). It is to be understood that the 'workgroup', 'warp' and 'thread' terminology used herein is not intended to be limiting, and that other terminology could be used to describe the same concepts. For example, a 'thread' as described herein could alternatively be referred to as an 'invocation' or a 'work-item', whilst a 'workgroup' as described herein could alternatively be referred to as a 'thread block' or a 'thread-group'.

The processing unit 102 is configured to multiply a sparse matrix and a dense matrix to determine an output matrix. Matrix multiplication is a common operation that is performed by many computer processing systems, for many different purposes, such as for implementing a layer (e.g. a fully connected layer or a convolution layer) of a neural network. In particular, sparse matrix-dense matrix multiplication is an important kernel in deep learning and scientific computing applications. Figure 2 illustrates a matrix multiplication operation to determine an output matrix 202 (**Y**) by multiplying a weight matrix 204 **(W)** and an input matrix 206 **(X),** such that **Y=WX**. The weight matrix may be referred to herein as a sparse matrix, and the input matrix may be referred to herein as a dense matrix. The output matrix, **Y**, is an $m \times n$ matrix, i.e. it has $m$ rows and $n$ columns; the weight matrix, **W,** is an $m \times p$ matrix, i.e. it has $m$ rows and $p$ columns; and the input matrix, **X,** is a $p \times n$ matrix, i.e. it has $p$ rows and $n$ columns. In the main examples described herein $m = p$, such that in these examples, the input and output matrices have the same dimensions as each other, and the weight matrix is a square matrix with the same number of rows as the input and output matrices. In other examples $m \neq p$. According to normal matrix multiplication operations, a coefficient (or "element") in row i and column j of the output matrix ($Y_{ij}$) is given by $Y_{ij} = \sum_{k=0}^{k=n} W_{ik} X_{kj}$ . For example, Figure 2 shows a row 208 ("row i") of the output matrix, and in particular highlights two elements $210_1$ and $210_2$ of that row of the output matrix which are at column positions $j_1$ and $j_2$ respectively. Element $210_1$ of the output matrix is determined by summing the results of multiplying the elements of the i$^{th}$ row 212 of the weight matrix 204 with the respective elements of the $j_1^{th}$ column $214_1$ of the input matrix 206. Similarly, element $210_2$ of the output matrix is determined by summing the results of multiplying the elements of the i$^{th}$ row 212 of the weight matrix 204 with the respective elements of the $j_2^{th}$ column $214_2$ of the input matrix 206.

In the description provided herein, the W matrix 204 is a sparse matrix. In other words, a majority of the elements of the W matrix are zero (i.e. have a value of zero). For example, it may be that less than 5% or less than 10% of the elements of the W matrix are non-zero (i.e. have non-zero values). In contrast, the **X** matrix 206 is not a sparse matrix, i.e. the **X** matrix is a dense matrix. For example, a majority of the elements of the **X** matrix may be non-zero.

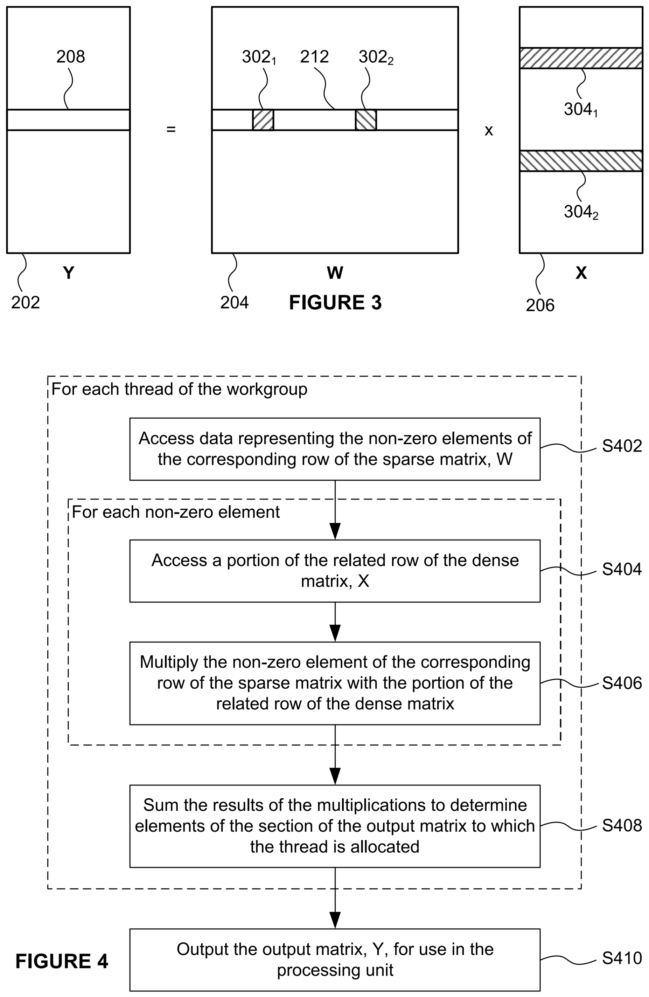

A 'sparse matrix-dense matrix multiplication' (which may be referred to as "SpMM") is often used when implementing a neural network. In particular, it is often the case that the weight matrix that is applied in a layer of a neural network is a sparse matrix. When most of the elements of the matrix 204 are zero (i.e. when the matrix 204 is a sparse matrix), the matrix multiplication of the sparse matrix 204 with the input matrix 206 can be performed efficiently, i.e. more efficiently than a general matrix multiplication operation can be implemented. Figure 3 illustrates a matrix multiplication similar to the matrix multiplication shown in Figure 2. In particular, Figure 3 illustrates a sparse matrix-dense matrix multiplication operation to determine the output matrix 202 (**Y**) by multiplying the sparse matrix 204 **(W)** and the dense input matrix 206 **(X),** such that **Y=WX**. The output matrix represents a result of multiplying the sparse matrix and the dense matrix. Figure 3 shows a row 208 of the output matrix 202 being determining by multiplying a corresponding row 212 of the sparse matrix 204 with elements of the input matrix 206. The row 212 of the sparse matrix 212 includes only two non-zero elements $302_1$ and $302_2$, which are shown with hatching in Figure 3. All of the other elements of the row 212 of the sparse matrix (other than elements $302_1$ and $302_2$) are zero, i.e. have a value of zero. Each non-zero element of the row 212 of the sparse matrix 204 is multiplied by the elements of a related row of the input matrix 206 as part of the process for determining the elements of the row 208 of the output matrix 202. In particular, the non-zero element $302_1$ is multiplied by each of the elements in the related row $304_1$ of the input matrix 206, and the non-zero element $302_2$ is multiplied by each of the elements in the related row $304_2$ of the input matrix 206. The results of the multiplications are summed to determine the elements of the row 208 of the output matrix 202. In this way, the row 208 of the output matrix can be determined very efficiently since only a small number (e.g. two in the example shown in Figure 3) of the elements in the row 212 of the sparse matrix 204 have non-zero values. The column position of the non-zero element $302_1$ in the sparse matrix 204 matches the row position of its related row $304_1$ in the input matrix 206. Similarly, the column position of the non-zero element $302_2$ in the sparse matrix 204 matches the row position of its related row $304_2$ in the input matrix 206.

Each row of the sparse matrix 204 includes a small number of non-zero elements which will be used for multiplication with values of the dense matrix 206. In order to determine the values of the output matrix 202, each non-zero element of the sparse matrix 204 will be multiplied by a row of values from the dense matrix 206.

Figure 4 is a flow chart for a method of multiplying a sparse matrix 204 and a dense matrix 206 on a processing unit 102 to determine an output matrix 202. In other words, the processing unit 102 is configured to implement a multiplication operation to multiply the sparse matrix 204 and the dense matrix 206 to determine the output matrix 202. The processing unit 102 comprises one or more execution modules, where workgroups are allocated to the execution modules, and each of the execution modules is configured to execute threads of the workgroup(s) that is(are) allocated to that execution module. Figure 1 shows an example in which there is just one execution module 106, and it is configured to execute threads of a workgroup that is allocated to it. The threads of a workgroup are executed by (only) one execution module and can share resources of the execution module such as sharing access to registers and cache memories and sharing state data and/or other temporary data that exists during the processing of the threads. The cache(s) 108 shown in Figure 1 may comprise a set of one or more caches configured to store data of the sparse matrix 204. The cache(s) 108 shown in Figure 1 may comprise a cache configured to store portions of rows of the dense matrix 206.

The threads of a workgroup are allocated to respective sections of the output matrix 202, wherein each of the sections is a portion of a row of the output matrix. Each portion of a row of the output matrix may comprise a plurality of elements of the row of the output matrix. The sections of the output matrix to which the threads of the workgroup are allocated are non-overlapping and contiguous, and may be referred to as "tiles".

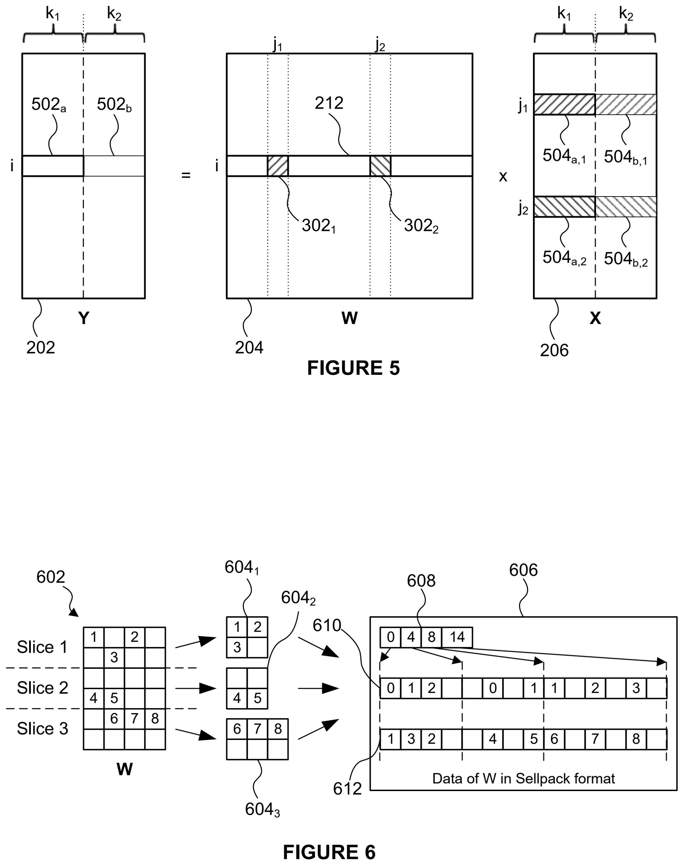

For example, Figure 5 shows two sections (or "tiles") $502_a$ and $502_b$ of the output matrix 202. Each of the sections $502_a$ and $502_b$ is a portion of the $i^{th}$ row of the output matrix 202. Multiple threads of the workgroup are allocated to respective portions of the same row of the output matrix 202. In the example shown in Figure 5 there will be two threads allocated to respective portions of each of the rows of the output matrix 202. In other examples, a different number of threads may be allocated to respective portions of each of the rows of the output matrix.

In the method shown in Figure 4, steps S402 to S408 are performed for each thread of the workgroup when the thread is executed by the execution module 106. In step S402 the thread accesses data, e.g. from the cache(s) 108, representing one or more non-zero elements of a corresponding row of the sparse matrix 204. As described above, a row-position of the 'corresponding row' of the sparse matrix 204 matches (i.e. equals) a row-position of the portion of the row of the output matrix 202 of the section to which the thread is allocated. For example, for the threads allocated to sections $502_a$ and $502_b$, which are portions of the $i^{th}$ row of the output matrix 202, the 'corresponding row' of the sparse matrix is the $i^{th}$ row 212 of the sparse matrix 204. Both of these threads access the same row (row 212) of the sparse matrix 204, e.g. from the cache(s) 108. The 'corresponding row' may be referred to using other terms, such as an 'associated row' or a 'related row'. Step S402 involves accessing the non-zero elements of the corresponding row 212: the elements of the corresponding row 212 that have a value of zero do not need to be accessed. In the example shown in Figure 5, the row 212 of the sparse matrix 204 includes (only) two non-zero elements $302_1$ and $302_2$.

In the method shown in Figure 4, steps S404 and S406 are performed for each non-zero element of the 'corresponding row' 212 of the sparse matrix when a thread is executed by the execution module 106. Therefore, in the example shown in Figure 5, steps S404 and S406 are performed for each of the two non-zero elements $302_1$ and $302_2$ of the row 212 of the sparse matrix 204. In step S404, for each of the non-zero elements of the corresponding row of the sparse matrix 204, the thread accesses (e.g. from the cache(s) 108) a portion of a related row of the dense matrix 206. The position of the portion of the 'related row' in the dense matrix, for a non-zero element of the corresponding row of the sparse matrix, is such that: (i) a row-position of the related row in the dense matrix 206 matches (i.e. equals) a column-position of the non-zero element in the sparse matrix 204, and (ii) a column-position of the portion of the related row of the dense matrix 206 matches (i.e. equals) a column-position of the portion of the row of the output matrix 202 of the section to which the thread is allocated. The 'related row' may be referred to using other terms, such as a 'complementary row', an 'associated row' or a 'corresponding row'. As a first example, for the thread allocated to section $502_a$ of the output matrix (which is in the leftmost $k_1$ columns of the output matrix), the corresponding row 212 of the sparse matrix has two non-zero elements $302_1$ and $302_2$. For the non-zero element $302_1$, which is in column $j_1$ of the row 212 of the sparse matrix, the portion of the related row in the dense matrix, is denoted $504_{a,1}$ in Figure 5, which is in row $j_1$ and is in the leftmost $k_1$ columns of the dense matrix 206, as shown in Figure 5. For the non-zero element $302_2$, which is in column $j_2$ of the row 212 of the sparse matrix, the portion of the related row in the dense matrix, is denoted $504_{a,2}$ in Figure 5, which is in row $j_2$ and is in the leftmost $k_1$ columns of the dense matrix 206, as shown in Figure 5. As a second example, for the thread allocated to section $502_b$ of the output matrix (which is in the rightmost $k_2$ columns of the output matrix), the corresponding row 212 of the sparse matrix has two non-zero elements $302_1$ and $302_2$. For the non-zero element $302_1$, which is in column $j_1$ of the row 212 of the sparse matrix, the portion of the related row in the dense matrix, is denoted $504_{b,1}$ in Figure 5, which is in row $j_1$ and is in the rightmost $k_2$ columns of the dense matrix 206, as shown in Figure 5. For the non-zero element $302_2$, which is in column $j_2$ of the row 212 of the sparse matrix, the portion of the related row in the dense matrix, is denoted $504_{b,2}$ in Figure 5, which is in row $j_2$ and is in the rightmost $k_2$ columns of the dense matrix 206, as shown in Figure 5.

In step S406 for each of the non-zero elements of the corresponding row of the sparse matrix 204, the thread multiplies the non-zero element with the portion of the related row of the dense matrix that was accessed in step S404. For example, the non-zero element may be multiplied with the portion of the related row of the dense matrix using a vectorised operation. In this way the non-zero element is multiplied with a vector having elements of the portion of the related row of the dense matrix, such that the result of the multiplication is a vector. The non-zero element is multiplied simultaneously with the elements of the vector representing the portion of the related row of the dense matrix. For example, for processing the thread allocated to the section $502_a$ of the output matrix, the non-zero element $302_1$ is multiplied with the portion $504_{a,1}$ of the dense matrix to determine a multiplication result (e.g. as a vector), and the non-zero element $302_2$ is multiplied with the portion $504_{a,2}$ of the dense matrix to determine a multiplication result (e.g. as a vector). Similarly, for processing the thread allocated to the section $502_b$ of the output matrix, the non-zero element $302_1$ is multiplied with the portion $504_{b,1}$ of the dense matrix to determine a multiplication result (e.g. as a vector), and the non-zero element $302_2$ is multiplied with the portion $504_{b,2}$ of the dense matrix to determine a multiplication result (e.g. as a vector).

In step S408, which is performed for each thread of the workgroup, the thread sums results of the multiplications performed in step S406 to determine the elements of the section of the output matrix to which the thread is allocated. As described above, the results of the multiplications may be vectors, and step S408 may involve summing the vectors. That is, in step S408, each of the threads may perform element-wise addition of the results of the multiplications to thereby sum the results of the multiplications to determine the elements of the section of the output matrix to which the thread is allocated. For example, for processing the thread allocated to the section $502_a$ of the output matrix, step S408 involves summing the result of multiplying the non-zero element $302_1$ and the portion $504_{a,1}$ of the dense matrix with the result of multiplying the non-zero element $302_2$ and the portion $504_{a,2}$ of the dense matrix. As another example, for processing the thread allocated to the section $502_b$ of the output matrix, step S408 involves summing the result of multiplying the non-zero element $302_1$ and the portion $504_{b,1}$ of the dense matrix with the result of multiplying the non-zero element $302_2$ and the portion $504_{b,2}$ of the dense matrix. For each of the threads of the workgroup, step S408 determines the elements of the section (or "tile") of the output matrix allocated to that thread.

In step S410 the execution module 106 outputs the output matrix 202. For example, when threads have been processed for all of the sections of the output matrix 202 then the output matrix can be output. The determination of the values of the output matrix may be performed by the threads of one or more workgroups. If multiple workgroups determine different sections of the output matrix, the different workgroups may be executed on the same execution module, or may be executed on different execution modules, for determining different sections of the output matrix. The output matrix can then be used for any suitable purpose, e.g. in the processing unit 102. For example, the output matrix may represent an output of a layer of a neural network and may be used as an input to a subsequent layer of the neural network. The output matrix may represent the final output of a neural network. To give some examples, sparse matrix-dense matrix multiplication may be used for scientific computing applications and for implementing graph neural networks. Some example uses of scientific computing applications which may implement sparse matrix-dense matrix multiplications are 'all-pairs shortest-paths' problems in graph analytics, non-negative matrix factorization for dimensionality reduction, quantum Monte Carlo simulations for large chemical systems, and interior-point methods for semidefinite programming. Some example uses of graph neural networks which may implement sparse matrix-dense matrix multiplications are node classification, traffic forecasting on road network, recommender systems on user-item graphs and knowledge graphs.

The output matrix may represent the output of a matrix multiplication for any type of processing, not just the processing of a neural network. The output matrix that is output in step S410 may be used in any suitable way, e.g. stored (e.g. in memory 104), used as an input to another process in the processing system 100 and/or transmitted to another device.

Multiple threads of the workgroup are allocated to respective portions of the same row of the output matrix. In the example shown in Figure 5, two threads are allocated to the respective portions $502_a$ and $502_b$ of the $i^{th}$ row of the output matrix 202. Threads that are allocated to the same row of the output matrix will access the data of the same row (e.g. row 212 in Figure 5) of the sparse matrix. The data for the row of the sparse matrix comprises the non-zero elements of that row of the sparse matrix. The first time that the data of a row of the sparse matrix is accessed, it may be accessed from the memory 104 and stored in the cache(s) 108. The next time the data of the row of the sparse matrix is accessed then it may be accessed from the cache(s) 108 rather than from the memory 104. By having multiple threads of the workgroup being allocated to respective portions of the same row of the output matrix, the likelihood of the data of the row of the sparse matrix being able to be accessed from the cache(s) 108 rather than from the memory 104 is increased. In other words, the cache hit rate of the cache(s) 108 is increased. It is noted that where there are multiple execution modules then each execution module may have a set of one or more caches that are dedicated for its use (and not for use by the other execution modules). As described above, the threads of a workgroup are all executed by the same execution module. As such, having multiple threads of a workgroup allocated to respective portions of the same row of the output matrix, means that the same execution module is used to process those threads, and therefore the same caches are used for accessing the data (e.g. the non-zero elements) of the corresponding row of the sparse matrix. This will tend to improve the cache hit rate of the caches.

Accessing data from the system memory 104 is a very slow process that consumes a lot of power compared to accessing data from the cache(s) 108. For example, the latency and power consumption associated with accessing data from the memory 104 may be orders of magnitude greater than with accessing data from the cache(s) 108. As such, improving the cache hit rate of the cache(s) 108 can significantly improve the efficiency of the processing system 100. In particular, the processing system 100 is able to efficiently implement the multiplication of a sparse matrix and a dense matrix as described herein with multiple threads of a workgroup being allocated to respective portions of the same row of the output matrix. The efficiency may be in terms of a reduced processing latency (i.e. improved performance), a reduced power consumption and/or a reduced memory bandwidth. Here the term "memory bandwidth" is used to refer to the amount of data that is transferred to and from the memory 104.

A sliced ellpack (or "sellpack") format is a known format that can be used for storing data of a sparse matrix. In particular, the sellpack format can be used to efficiently represent sparse matrices with varying numbers of non-zero elements per row. Figure 6 shows how the data of an example of the sparse matrix **(W)** 602 can be represented in a sellpack format. In the example shown in Figure 6, the sparse matrix 602 is a 6x4 matrix, with some non-zero elements having values as shown in Figure 6. The elements of the sparse matrix 602 for which Figure 6 does not show a value have a value of zero. It can be seen that most of the elements of the sparse matrix 602 have a value of zero in this example (in particular 16 out of the 24 elements of the sparse matrix have a value of zero in this example). The sparse matrix 602 is divided into slices. Each of the slices represents a set of N rows of the sparse matrix, where N is an integer. In other words, all of the slices represent the same number of rows of the sparse matrix. Each slice represents a contiguous block of rows of the sparse matrix. In the example shown in Figure 6, the sparse matrix 602 is divided into three slices, each of which represents a block of two rows of the sparse matrix (i.e. N=2 in this example).

The slices of the sparse matrix can be condensed. That is, the zero elements (i.e. the elements having a value of zero) are removed from each row and the non-zero elements are shifted to the left to fill any gaps left by removing the zero elements. Within each slice, the maximum number, p, of non-zero elements in a row is determined, and then, if necessary, each of the rows is padded up with zero elements (i.e. elements having a value of zero) at the righthand end of the row so that it has p elements. The result of this is shown in Figure 6, wherein the first slice is represented by the 2x2 block of elements $604_1$, the second slice is represented by the 2x2 block of elements $604_2$, and the third slice is represented by the 2x3 block of elements $604_3$. Different slices may have a different maximum number of non-zero elements per row, so different slices may be padded to different lengths.

The data of the sparse matrix in the sellpack format is shown in box 606 in Figure 6. In particular, the data of the sparse matrix in the sellpack format comprises a set of slice offsets 608, a string of column indices 610 and a string of values 612. The string of values 612 comprises the non-zero elements of the sparse matrix, and the string of column indices 610 corresponds to the values in the string of values 612. For each of the slices, a section of the string of values 612 comprises the non-zero elements of the slice of the sparse matrix in column-major order, and a section of the string of column indices 610 comprises column indices corresponding to the non-zero elements of the slice of the sparse matrix in column-major order. The set of slice offsets 608 indicate the positions of the sections within the string of values 612 and within the string of column indices 610 that relate to the respective slices.

In the example shown in Figure 6, the first value in the set of slice offsets 608 points to position 0 to indicate that the section of the string of column indices 610 and the section of the string of values 612 that relate to the first slice start at position 0 in the respective strings. Since the first slice is represented with the 2x2 block of elements $604_1$, which has values $\begin{bmatrix} 1 & 2 \\ 3 & . \end{bmatrix}$, the first section of the string of values 612, in column-major order, has values [1, 3, 2, ·]. Looking at the columns of the sparse matrix 602 where the non-zero elements of the first slice are located, it can be seen that the value '1' is located in column 0, the value '3' is located in column 1 and the value '2' is located in column 2, so the first section of the string of column indices 610, in column-major order, is [0, 1, 2, ·]. Here '·' is used to represent a zero value, i.e. that there is not a non-zero element present at this position.

In the example shown in Figure 6, the second value in the set of slice offsets 608 points to position 4 to indicate that the section of the string of column indices 610 and the section of the string of values 612 that relate to the second slice start at position 4 in the respective strings. Since the second slice is represented with the 2x2 block of elements $604_2$, which has values $\begin{bmatrix} . & . \\ 4 & 5 \end{bmatrix}$, the second section of the string of values 612, in column-major order, has values [·, 4, ·, 5]. Looking at the columns of the sparse matrix 602 where the non-zero elements of the second slice are located, it can be seen that the value '4' is located in column 0 and the value '5' is located in column 1, so the second section of the string of column indices 610, in column-major order, is [·, 0, ·, 1].

In the example shown in Figure 6, the third value in the set of slice offsets 608 points to position 8 to indicate that the section of the string of column indices 610 and the section of the string of values 612 that relate to the third slice start at position 8 in the respective strings. Since the third slice is represented with the 2x3 block of elements $604_3$, which has values $\begin{bmatrix} 6 & 7 & 8 \\ . & . & . \end{bmatrix}$, the third section of the string of values 612, in column-major order, has values [6, ·, 7, ·, 8, ·]. Looking at the columns of the sparse matrix 602 where the non-zero elements of the third slice are located, it can be seen that the value '6' is located in column 1, the value '7' is located in column 2 and the value '8' is located in column 3, so the third section of the string of column indices 610, in column-major order, is [1, ·, 2, ·, 3, ·]. The fourth value in the set of slice offsets 608 points to position 14 to indicate that the section of the string of column indices 610 and the section of the string of values 612 that relate to the next slice (if any exists) would start at position 14 in the respective strings. In the example shown in Figure 6 the slice offsets are shown as absolute values, but they could be represented in any suitable manner, e.g. as delta values (or differences) from the previous slice offset.

As explained in more detail below, flattening the arrays into the strings 610 and 612 in column-major order achieves memory coalescing, thereby allowing contiguous memory access patterns.

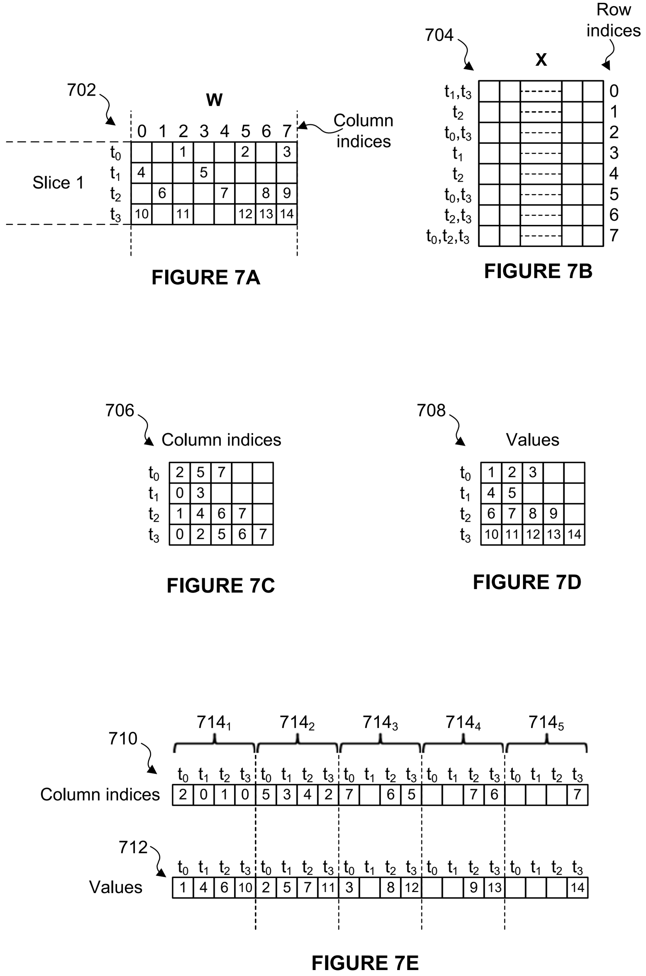

As explained above, a thread which is allocated to a portion of a row of the output matrix will access a corresponding row of the sparse matrix, **W**, and for each non-zero element in the corresponding row of the sparse matrix the thread will access a portion of a related row of the dense matrix, **X**. Figure 7A shows threads being associated with rows of a slice of the sparse matrix. In this example, a first slice of the sparse matrix 702 comprises four rows, and four threads (denoted $t_0$, $t_1$, $t_2$ and $t_3$ in Figures 7A to 7E) of a warp will access respective ones of these rows of the sparse matrix. The values of the non-zero elements of the slice of the sparse matrix 702 are shown in Figure 7A, and where no value is shown for an element in Figure 7A this indicates that that element has a value of zero.

Figure 7B shows the threads ($t_0$, $t_1$, $t_2$ and $t_3$) being associated with rows of the dense matrix 704. In this example, for simplicity of illustration, the portions of the rows of the dense matrix with which the threads are associated are whole rows of the dense matrix, but it is to be understood that in other examples, the portions of the rows of the dense matrix with which the threads are associated may be smaller than whole rows of the dense matrix. In the example shown in Figures 7A and 7B, thread $t_0$ accesses the non-zero elements (with values of 1, 2 and 3) on the first row of the slice of the sparse matrix 702, which are located in columns 2, 5 and 7, and as such thread $t_0$ will access rows 2, 5 and 7 of the dense matrix 704, as indicated in Figure 7B. Thread $t_1$ accesses the non-zero elements (with values of 4 and 5) on the second row of the slice of the sparse matrix 702, which are located in columns 0 and 3, and as such thread $t_1$ will access rows 0 and 3 of the dense matrix 704, as indicated in Figure 7B. Thread $t_2$ accesses the non-zero elements (with values of 6, 7, 8 and 9) on the third row of the slice of the sparse matrix 702, which are located in columns 1, 4, 6 and 7, and as such thread $t_2$ will access rows 1, 4, 6 and 7 of the dense matrix 704, as indicated in Figure 7B. Thread $t_3$ accesses the non-zero elements (with values of 10, 11, 12, 13 and 14) on the fourth row of the slice of the sparse matrix 702, which are located in columns 0, 2, 5, 6 and 7, and as such thread $t_3$ will access rows 0, 2, 5, 6 and 7 of the dense matrix 704, as indicated in Figure 7B.

Figure 7C shows the column indices of the slice of the sparse matrix 702 in a condensed form 706 where for each row the zero elements (i.e. the elements with a value of zero) have been removed and then each row has been padded up with zeros to have a number of elements that is equal to the maximum number of non-zero elements in a row within the slice. Similarly, Figure 7D shows the values of the slice of the sparse matrix 702 in a condensed form 708 where for each row the zero elements have been removed and then each row has been padded up with zeros to have a number of elements that is equal to the maximum number of non-zero elements in a row within the slice. Figure 7E shows a string of column indices 710 and a string of values 712 for the slice of the sparse matrix 702 in a sellpack format. In particular, the string of column indices 710 represents the block of column indices 706 in column-major order. Similarly, the string of values 712 represents the block of values 708 in column-major order.

Figure 7E shows, above each of the column indices in the string of column indices 710, which of the threads is associated with that column index. Similarly, Figure 7E shows, above each of the values in the string of values 712, which of the threads is associated with that value. The different threads are processed in parallel. In particular, the threads $t_0$ to $t_3$ are part of the same warp and so they are executed in parallel in lockstep with each other. In a first iteration, represented by the bracket $714_1$ in Figure 7E, in parallel in step S406: (i) thread $t_0$ multiplies the value '1' with row 2 of the dense matrix 704, (ii) thread $t_1$ multiplies the value '4' with row 0 of the dense matrix 704, (iii) thread $t_2$ multiplies the value '6' with row 1 of the dense matrix 704, and (iv) thread $t_3$ multiplies the value '10' with row 0 of the dense matrix 704. In a second iteration, represented by the bracket $714_2$ in Figure 7E, in parallel in step S406: (i) thread $t_0$ multiplies the value '2' with row 5 of the dense matrix 704, (ii) thread $t_1$ multiplies the value '5' with row 3 of the dense matrix 704, (iii) thread $t_2$ multiplies the value '7' with row 4 of the dense matrix 704, and (iv) thread $t_3$ multiplies the value '11' with row 2 of the dense matrix 704. In a third iteration, represented by the bracket $714_3$ in Figure 7E, in parallel in step S406: (i) thread $t_0$ multiplies the value '3' with row 7 of the dense matrix 704, (ii) thread $t_1$ is idle, (iii) thread $t_2$ multiplies the value '8' with row 6 of the dense matrix 704, and (iv) thread $t_3$ multiplies the value '12' with row 5 of the dense matrix 704. In a fourth iteration, represented by the bracket $714_4$ in Figure 7E, in parallel in step S406: (i) threads $t_0$ and $t_1$ are idle, (ii) thread $t_2$ multiplies the value '9' with row 7 of the dense matrix 704, and (iii) thread $t_3$ multiplies the value '13' with row 6 of the dense matrix 704. In a fifth iteration, represented by the bracket $714_5$ in Figure 7E, in step S406: (i) threads $t_0$, $t_1$ and $t_2$ are idle, and (ii) thread $t_3$ multiplies the value '14' with row 7 of the dense matrix 704.

Then in parallel in step S408 each of threads $t_0$ to $t_3$ will sum the results of the multiplications they performed in step S406 in order to determine the values of the sections of the output matrix to which the respective threads are allocated. As described above, the multiplications and sums performed in steps S406 and S408 can be implemented as vector operations. In this way, each thread element-wise adds the vectors that result from the multiplications that it has performed, to determine a vector representing the section of the output matrix to which the thread is allocated.

As described above, the data representing the sparse matrix, in the sellpack format, can be accessed from the cache(s) 108. By storing the data of the sparse matrix in the sellpack format, sequential threads of the workgroup will access data representing non-zero elements of the sparse matrix from sequential locations of the cache(s) 108. This is because of the way in which the data representing the non-zero elements is stored in column-major order in the string of column indices and the string of values. The threads shown in Figures 7A to 7E are threads of the same warp and are executed in lockstep with each other. Each of the threads of a warp accesses a consecutive non-zero element of the sparse matrix according to the column-major order of the sellpack format. This can be seen in the example shown in Figure 7E in which thread $t_0$ accesses the first column index and the first value on each iteration 714, thread $t_1$ accesses the second column index and the second value on each iteration 714, thread $t_2$ accesses the third column index and the third value on each iteration 714, and thread $t_3$ accesses the fourth column index and the fourth value on each iteration 714. When consecutive threads access consecutive memory addresses, this is known as 'memory coalescing'. Memory coalescing provides efficient access to data, e.g. from the cache(s) 108 or from the memory 104. In particular, when threads access consecutive memory addresses, a memory controller can combine these accesses into fewer transactions (e.g. a single transaction). This reduces the number of separate memory transactions and thus improves the overall memory access efficiency.

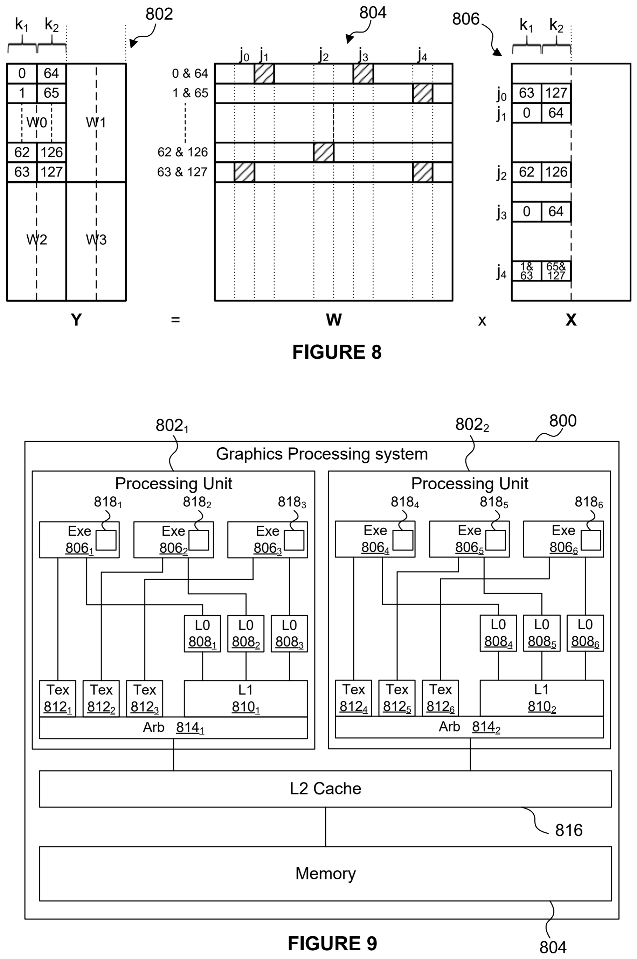

The matrix multiplications described above involve small matrices, so that the principles can be clearly explained. Figure 8 shows a multiplication of larger matrices, which is often how the multiplications will be implemented in practice, e.g. for implementing neural network. Figure 8 shows an output matrix 802 whose elements are determined by multiplying a sparse matrix 804 with a dense matrix 806. As described above, threads are allocated to respective sections of the output matrix 802, where each of the sections is a portion of a row of the output matrix 802. In the example shown in Figure 8, multiple workgroups are implemented to determine the whole output matrix 802. In particular, four workgroups (labelled WO, W1, W2 and W3 in Figure 8) are implemented to determine four respective quarters of the output matrix 802. Each of the workgroups comprises multiple warps. Each of the warps comprises a plurality of the threads allocated to portions of different rows of the output matrix. For each of a plurality of the rows of the output matrix, threads of different warps are allocated to respective portions of that row of the output matrix. In the example shown in Figure 8, each of the workgroups comprises 128 threads, arranged into two warps, with each warp comprising 64 threads. In other examples, there may be a different number of workgroups, each workgroup may comprise a different number of threads, each workgroup may comprise a different number of warps, and/or each warp may comprise a different number of threads.

The processing unit 102 may have a limit on the number of threads that can run simultaneously. For example, the maximum number of threads that can run simultaneously on the execution module 106 may be 128. The number of threads in a workgroup may be equal to the number of threads that can be executed simultaneously on the execution module 106. Figure 8 indicates which portions of the output matrix 802, the sparse matrix 804 and the dense matrix 806 are associated with different threads of a workgroup. In particular, workgroup WO comprises 128 threads, and each of the threads is allocated to a section of the output matrix in the top left quartile of the output matrix as shown in Figure 8. The first warp of workgroup WO comprises threads 0 to 63, and these 64 threads are allocated to portions of the first 64 rows of the output matrix. Figure 8 denotes the thread number of the threads allocated to some of the sections of the output matrix 802. The second warp of workgroup WO comprises threads 64 to 127, and these 64 threads are allocated to portions of the first 64 rows of the output matrix as shown in Figure 8. The sections of the output matrix that are allocated to the threads of a workgroup are non-overlapping and contiguous (and may be referred to as "tiles"). The sections of the output matrix that are allocated to the threads of the workgroup WO fill the top-left quartile of the output matrix, although for clarity, only eight of the sections of the workgroup WO (allocated to threads 0, 1, 62, 63, 64, 65, 126 and 127) are shown in Figure 8. In this example, each the workgroups WO, W1, W2 and W3 comprises 128 threads. Collectively the sections allocated to the threads of the workgroups WO, W1, W2 and W3 completely fill the output matrix 802.

The output matrix is partitioned into the sections so that multiple threads of a workgroup are allocated to portions of the same row, which tends to increase the cache hit rate for accessing the data of the sparse matrix from the cache(s) 108 as described above, i.e. it promotes temporal cache locality when accessing sparse matrix entries. As shown in Figure 8, workgroup WO has two threads allocated to sections on each of a plurality of the rows of the output matrix 802. For example, thread 0 and thread 64 are allocated to sections corresponding to different groups of elements on the top row of the output matrix 802. For example, thread 0 is allocated to a section corresponding to the first quarter of the elements of the top row of the output matrix 802, and thread 64 is allocated to a section corresponding to the second quarter of the elements of the top row of the output matrix 802. Similarly, in the example shown in Figure 8, thread 1 is allocated to a section corresponding to the first quarter of the elements of the second row of the output matrix 802, and thread 65 is allocated to a section corresponding to the second quarter of the elements of the second row of the output matrix 802. As shown in Figure 8, in this example, thread 62 is allocated to a section corresponding to the first quarter of the elements of the 63rd row of the output matrix 802, and thread 126 is allocated to a section corresponding to the second quarter of the elements of the 63rd row of the output matrix 802. Also, as shown in Figure 8, in this example, thread 63 is allocated to a section corresponding to the first quarter of the elements of the 64th row of the output matrix 802, and thread 127 is allocated to a section corresponding to the second quarter of the elements of the 64th row of the output matrix 802.

In the example shown in Figure 8, the 'corresponding row' of the sparse matrix 804 for threads 0 and 64 is the first row of the sparse matrix 804 (which has non-zero elements in columns $j_1$ and $j_3$) ; the 'corresponding row' of the sparse matrix 804 for threads 1 and 65 is the second row of the sparse matrix 804 (which has a non-zero element in column $j_4$); the 'corresponding row' of the sparse matrix 804 for threads 62 and 126 is the 63rd row of the sparse matrix 804 (which has a non-zero element in column $j_2$); and the 'corresponding row' of the sparse matrix 804 for threads 63 and 127 is the 64th row of the sparse matrix 804 (which has non-zero elements in columns $j_0$ and $j_4$).

As described above, when a thread is executed, each non-zero element of the corresponding row of the sparse matrix is multiplied by a portion of the related row of the dense matrix 806. As shown in Figure 8, when executing a thread, for each of the non-zero elements, the row-position of the related row in the dense matrix matches the column-position of the non-zero element in the sparse matrix, and the column-position of the portion of the related row of the dense matrix matches a column-position of the portion of the row of the output matrix of the section to which the thread is allocated. In the example shown in Figure 8, threads 0 to 63 are allocated to sections of the output matrix 802 in the leftmost $k_1$ columns of the output matrix, and for these threads the portions of the related rows of the dense matrix are in the leftmost $k_1$ columns of the dense matrix. Similarly, in the example shown in Figure 8, threads 64 to 127 are allocated to sections of the output matrix 802 in the next $k_2$ columns following the leftmost $k_1$ columns of the output matrix, and for these threads the portions of the related rows of the dense matrix are in the next $k_2$ columns following the leftmost $k_1$ columns of the dense matrix.

As an example, when thread 0 is executed the non-zero element in column $j_1$ of the sparse matrix is multiplied by the portion of row $j_1$ of the dense matrix 806 having the same column position as the portion of the row of the output matrix of the section to which thread 0 is allocated (i.e. the first quarter of the columns), to determine a first vector result ($v_1$). Furthermore, when thread 0 is executed the non-zero element in column $j_3$ of the sparse matrix is multiplied by the portion of row $j_3$ of the dense matrix 806 having the same column position as the portion of the row of the output matrix of the section to which thread 0 is allocated (i.e. the first quarter of the columns), to determine a second vector result ($v_2$). The values of the section of the output matrix allocated to thread 0 are determined by summing the first and second vector results ($v_1$ and $v_2$).

It is clear from the description of the execution of thread 0, and from Figure 8, what will be involved in the execution of the other threads of the workgroup, so for conciseness a detailed explanation of the execution of each of those threads is not provided herein. However, it is noted that the threads that are allocated to portions of the same row of the output matrix will access the same non-zero elements of the sparse matrix 804. It is also noted that threads for which the corresponding rows of the sparse matrix 804 have non-zero elements in the same column position (e.g. threads 1, 63, 65 and 127, for which the corresponding rows of the sparse matrix 804 have non-zero elements in column $j_4$) will access the same row of the dense matrix 806 (e.g. row $j_4$). Where threads access the same data as other threads in the same workgroup (e.g. where they access data of the sparse matrix 804 and/or data of the dense matrix 806) then efficiencies are achieved in accessing the data, e.g. from the cache(s) 108. Each of the workgroups has multiple threads allocated to respective portions of the same row of the output matrix, i.e. in each workgroup multiple threads access the same sparse matrix row and compute different tiles of the output matrix. Having multiple threads of the workgroup allocated to respective portions of the same row of the output matrix increases the times at which the efficiencies in accessing the data can be achieved.

It is also noted that threads for which the corresponding rows of the sparse matrix 804 have non-zero elements in adjacent column positions (e.g. threads 0 and 63, and threads 64 and 127, for which the corresponding rows of the sparse matrix 804 have non-zero elements in columns $j_0$ and $j_1$ which are adjacent to each other) will access the adjacent rows of the dense matrix 806 (e.g. rows $j_0$ and $j_1$). The data of the sparse matrix 804 can be stored in the sellpack format described above, such that the data of the sparse matrix comprises a string of values and a string of column indices corresponding to the values. Each workgroup may operate on a slice within the sellpack data. As described above, for each of the slices, a section of the string of values comprises the non-zero elements of the slice of the sparse matrix in column-major order, and a section of the string of column indices comprises column indices corresponding to the non-zero elements of the slice of the sparse matrix in column-major order. Due to the use of the sellpack format for storing the data of the sparse matrix, within a warp (e.g. within the warp comprising threads 0-63 or within the warp comprising threads 64 to 127) each of the threads accesses a consecutive non-zero element from the data of the sparse matrix 804 in a first iteration, and multiplies it with values from a row of the dense matrix 806. The non-zero elements are 'consecutive' in the sense that their data is stored in consecutive memory locations in the string of values and in the string of columns indices in the sellpack format. Having consecutive threads access data from consecutive memory locations may be referred to as memory coalescing, and as described above can provide efficiencies in the way in which data is accessed, e.g. from the memory 104 or from the cache(s) 108. Then, in the next iteration, each of the threads of the warp will access another consecutive non-zero element of the sparse matrix and multiply it with values of another row of the dense matrix. This continues until all of the 64 threads have finished processing all of the non-zero elements in their respective rows of the sparse matrix, at which point each of the threads sums the results of its multiplications to determine values of a row of the output matrix. The threads of the different warps of the workgroup can be scheduled for execution on the execution module 106 in any arbitrary order, and the first warp of the workgroup (which comprises threads 0 to 63) may or may not complete its iterations before the second warp of the workgroup (which comprises threads 64 to 127) completes its iterations. As described above, each of the threads 64-127 will access the same non-zero elements of the sparse matrix 804 as a corresponding one of the threads 0-63. For example, thread 64 will access the same non-zero elements of the sparse matrix as thread 0; thread 65 will access the same non-zero elements of the sparse matrix as thread 1; and so on. When thread 64 comes to access its non-zero elements of the sparse matrix they may already be stored in the cache(s) 108 from when they were used for thread 0.

A different approach for implementing the multiplication would be to have threads 64 to 127 below threads 0 to 63, i.e. for the workgroups to be twice as high but half as wide as in the example shown in Figure 8. However, implementing the multiplication like that would make it less likely that non-zero elements of W are stored in the cache(s) 108 when they are to be accessed compared to the examples described herein in which multiple threads of a workgroup are allocated to respective portions of the same row of the output matrix. It is noted again that all of the threads of a workgroup are executed by the same execution module 106 and have access to the same cache(s) 108. If the number of rows of the output matrix that are allocated to the threads in a warp is very low, the level of parallelism that can be achieved in the execution of the threads on the execution module decreases. This limitation arises because the width of the dense matrix is typically constrained. There is therefore a trade-off to consider when deciding how many threads of a workgroup/warp should be allocated to portions of the same row of the output matrix. An optimal number of rows of the output matrix allocated to the threads of a warp and the number of threads operating in each row can be determined through experimentation. For example, according to one hardware setup, the best configuration in terms of the performance of the processing unit can be achieved when two threads of a workgroup are assigned to each row of the output matrix, as shown in Figure 8.

Figure 9 shows an example in which the processing system is a graphics processing system 800 which comprises multiple processing units 802 (or "cores") for implementing the matrix multiplications described herein. The graphics processing system 800 comprises two processing units $802_1$ and $802_2$ which each operate similarly to the processing unit 102 described above. The graphics processing system 800 also comprises a memory 804 similar to the memory 104 described above. The graphics processing system 800 also comprises a level 2 ("L2") cache 816 coupled to the memory 804 and to each of the processing units $802_1$ and $802_2$. The processing unit $802_1$ is a graphics processing unit. The processing unit $802_1$ comprises three execution modules $806_1$, $806_2$ and $806_3$. The processing unit $802_1$ comprises multiple caches: three level 0 ("L0") caches

$808_1$, $808_2$ and $808_3$, a level 1 ("L1") cache $810_1$ and three texture caches ("Tex") $812_1$, $812_2$ and $812_3$. The processing unit $802_1$ comprises an arbitrator $814_1$ which manages communication between the texture caches ($812_1$, $812_2$ and $812_3$) or the L1 cache ($810_1$) and the L2 cache (816). Each of the execution modules $806_1$, $806_2$ and $806_3$ can access data from a respective one of the L0 caches $808_1$, $808_2$ and $808_3$, a respective one of the texture caches $812_1$, $812_2$ and $812_3$, the L1 cache $810_1$, the L2 cache 816 and the memory 804. Each of the execution modules $806_1$, $806_2$ and $806_3$ comprises a respective set of registers $818_1$, $818_2$ and $818_3$.

The processing unit $802_2$ is a graphics processing unit and corresponds with the processing unit $802_1$. As such, the processing unit $802_2$ comprises three execution modules $806_4$, $806_5$ and $806_6$. The processing unit $802_2$ comprises multiple caches: three level 0 ("L0") caches $808_4$, $808_5$ and $808_6$, a level 1 ("L1") cache $810_2$ and three texture caches ("Tex") $812_4$, $812_5$ and $812_6$. The processing unit $802_2$ comprises an arbitrator $814_2$ which manages communication between the texture caches ($812_4$, $812_5$ and $812_6$) or the L1 cache ($810_2$) and the L2 cache (816). Each of the execution modules $806_4$, $806_5$ and $806_6$ can access data from a respective one of the L0 caches $808_4$, $808_5$ and $808_6$, a respective one of the texture caches $812_4$, $812_5$ and $812_6$, the L1 cache $810_2$, the L2 cache 816 and the memory 804. Each of the execution modules $806_4$, $806_5$ and $806_6$ comprises a respective set of registers $818_4$, $818_5$ and $818_6$.

Each of the execution modules $806_x$ operates as described above in relation to execution module 106 using a set of caches ($808_x$, 810) to store and access data of the sparse matrix, e.g. in the sellpack format, and using a texture cache $812_x$ to store and access data of the dense matrix (where $x \in 1,2,3,4,5,6$).

A graphics processing unit is a particular type of processing unit which is configured for efficiently performing particular tasks, such as graphics rendering for rendering images of computer-generated scenes, and image processing tasks. Graphics rendering may for example be implemented using a rasterization technique or a ray tracing technique, or a combination thereof. A graphics processing unit would usually comprise a texture cache for use in graphics rendering and/or image processing. A texture cache is a particular type of cache which is optimised for efficiently selecting and reading out groups of adjacent values from within a larger array of values. In particular, a texture cache in a graphics processing unit is designed to optimize specific memory access patterns that are commonly found in graphics and image processing applications. Texture caches are tailored to leverage spatial locality, meaning they are optimized for accessing neighbouring data points. When accessing a row of elements, the texture cache can effectively prefetch and cache blocks of adjacent data, thereby reducing the number of memory fetches and improving overall performance. As such, the texture caches 812 in the graphics processing system 800 are optimised for reading out values of a row of elements of the dense matrix for the matrix multiplications described herein. For example, the texture caches 812 may be optimised to store data arranged into four channels, such that four values can be read back in one access operation.

In the matrix multiplication operations described herein, because of the sparse nature of the sparse matrix, each thread needs to access values from distinct rows of the dense matrix. The texture caches are used for the data of the dense matrix because in the matrix multiplication operations described herein, the threads will access portions of rows of the dense matrix at a time, i.e. a block of adjacent elements of the dense matrix, and the portions of the dense matrix that different threads will access may be distributed (i.e. separated) within the dense matrix. Texture caches are specifically designed to be optimised for this type of memory access, so using a texture cache for the data of the dense matrix allows the matrix multiplications described herein to make use of the existing optimised nature of the texture caches for accessing data in the desired manner. In contrast, the threads usually do not need to access blocks of adjacent elements of the sparse matrix, so it would not be so beneficial to store the data of the sparse matrix in a texture cache. As such, the data of the sparse matrix is not stored in a texture cache. The L0 and L1 caches 808, 810, are not texture caches (i.e. they are not designed to be optimised for accessing blocks of adjacent elements in the way that a texture cache is). The L0 and L1 caches 808, 810, may be general caches or "mixed caches".

In step S404 of the method described above, each of the threads of the workgroup may be arranged to, for each of the one or more non-zero elements of the corresponding row of the sparse matrix, access from the texture cache 812 a portion of the related row of the dense matrix to be multiplied with the non-zero element. As described above, the texture cache 812 is configured to allow access to elements of a group of adjacent elements of a portion of a row of the dense matrix together. Furthermore, the texture cache 812 is configured to allow random access to groups of adjacent elements of rows of the dense matrix. These groups of adjacent elements of rows of the dense matrix may be different groups, and may non-contiguous, i.e. non-adjacent, groups.

As described above, for each execution module 806, the texture cache 812 which stores data of the dense matrix is separate to the set of one or more caches 808, 810 which store data of the sparse matrix. The graphics processing unit 802 can be configured such that data of the sparse matrix is not stored in the texture cache 812 and data of the dense matrix is not stored in the set of one or more caches 808, 810. Caching the data for the dense matrix in a separate cache to the data for the sparse matrix means that the two different types of data do not kick each other out of their respective caches.

As described above, each of the execution modules 806 comprises a set of registers 818. In some examples, each of the threads of a workgroup is arranged to, for multiplying each of the one or more non-zero elements of the corresponding row of the sparse matrix with a portion of the related row of the dense matrix, store data representing the non-zero element of the corresponding row of the sparse matrix in a first set of one or more of the registers 818, and store data representing the portion of the related row of the dense matrix in a second set of one or more of the registers 818. In this way, dense matrix row slices and sparse matrix non-zero column indices and values can be read directly into the registers 818 on an execution module 806. These registers may be referred to as a "unified store". The data that is stored in the registers 818 may, or may not, also be stored in one of the caches of the processing unit. Usually the execution module 806 will not comprise many registers (so that the silicon area of the execution module can be kept low). As such, the registers 818 of the execution module 806 are not configured to store all of the data of the dense matrix or all of the data of the sparse matrix at any given time. Having data stored in the registers 818 means that there is very little latency in accessing the values on the execution module 806. Each thread that is executed on an execution module 806 works on one (i.e. only one) non-zero element of the sparse matrix at a time, using data of only one slice of the dense matrix rows. The capacity of the registers determines how many elements of a row of the dense matrix can be stored in the registers 818 at a given time. As the sparsity of the sparse matrix increases (i.e. as the ratio of zero elements to non-zero elements in the sparse matrix increases), the performance of the method improves.

Figure 9 shows multiple execution modules, but the details of the examples described above in relation to Figure 9 could also be implemented in systems in which there is just a single execution module (e.g. the processing system 100 shown in Figure 1). For example, there may be one execution module, one texture cache for storing data of the dense matrix, and one other cache for storing data of the sparse matrix. The execution module may comprise a set of registers for storing some of the data of the dense matrix and/or some of the data of the sparse matrix.

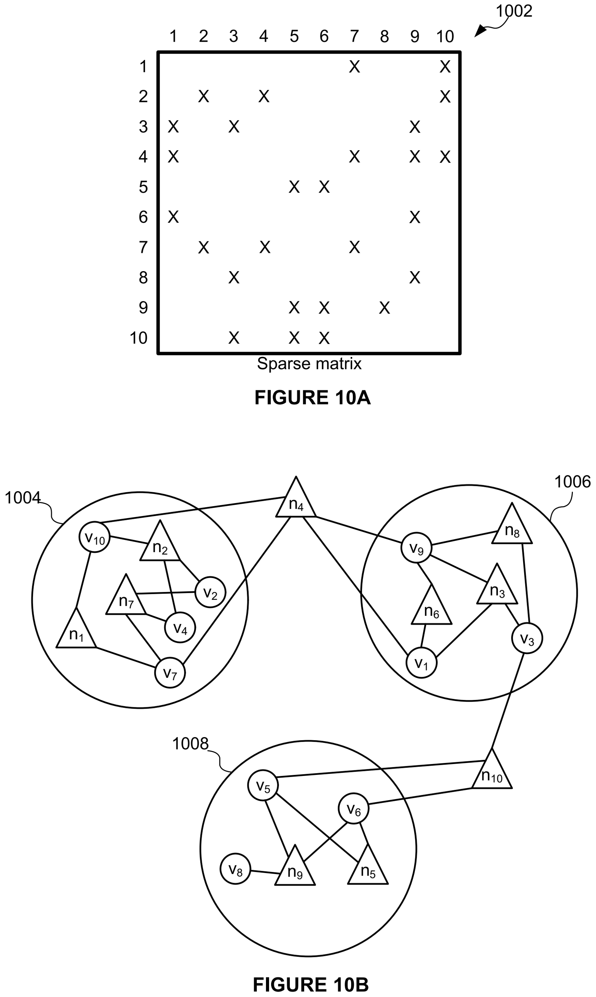

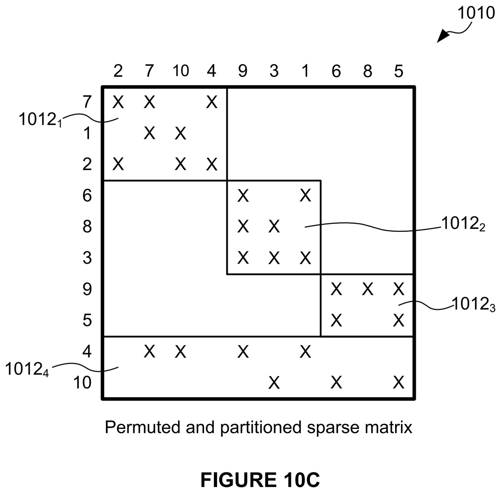

Figure 10A shows an example of a sparse matrix 1002 comprising a plurality of elements representative of non-zero values and a plurality of elements representative of zero values. In Figure 10A, elements of the sparse matrix 1002 representative of non-zero values are marked with an "X", whilst elements of the sparse matrix 1002 representative of zero values are not marked. For example, the elements of row 1 positioned in columns 7 and 10 of the sparse matrix 1002 are representative of non-zero values (and are marked with an "X"), whilst the other elements positioned in row 1 of the sparse matrix 1002 are representative of zero values (and are not marked with an "X"). In the example shown in Figures 10A and 10C, the sparse matrix is a square matrix, but in other examples the sparse matrix is not necessarily square. The sparse matrix 1002 shown in Figure 10A is a 10x10 matrix, and it is to be understood that this is a simplified example. In more realistic examples, the sparse matrix may be much larger than that shown in Figure 10A, e.g. the sparse matrix may be a 1024x1024 matrix, and the dense matrix and output matrix may be 1024x512 matrices as an example. A non-zero value may be positive or negative, and with any suitable magnitude that is not equal to zero.

The rows and columns of the sparse matrix 1002 can be rearranged (i.e. ordered) so as to gather the plurality of non-zero elements of the sparse matrix 1002 into a set of sub-matrices. The set of sub-matrices has a greater average density of non-zero elements than the sparse matrix 1002. In other words, the set of sub-matrices has a greater number of non-zero elements per total number of elements of the set of sparse sub-matrices than the number of non-zero elements per total number of elements of the sparse matrix. To describe this another way, the "non-zero density" of the set of sub-matrices, as a whole, is greater than the "non-zero density" of the sparse matrix 1002. The set of sub-matrices includes all of the non-zero elements of the sparse matrix 1002, but does not comprise all of the zero elements (i.e. elements having a value of zero) of the sparse matrix 1002. In other words, the set of sub-matrices comprises a subset of the elements of the sparse matrix. Increasing the number of zero elements of the sparse matrix 1002 that are not included in the set of sub-matrices, increases the average density of non-zero elements of the set of sub-matrices.

In some examples, each of the sub-matrices may have a greater average density of non-zero elements than the sparse matrix. In other words, each of the sub-matrices may have a greater number of non-zero elements per total number of elements of that sub-matrix than the number of non-zero elements per total number of elements of the sparse matrix. That is, in these examples, the "non-zero density" of each and every sub-matrix of the set of sub-matrices is greater than the "non-zero density" of the sparse matrix - although this need not be the case.

The rows and columns of the sparse matrix may be rearranged in dependence on a hypergraph model. A hypergraph model can be formed in dependence on the respective row and column position of each of the plurality of non-zero elements within the sparse matrix 1002. Figure 10B shows an example hypergraph model corresponding to the sparse matrix 1002 shown in Figure 10A. More generally, the rearranging of the rows and columns of the sparse matrix may be performed in dependence on a hypergraph model, a hypergraph clustering algorithm, a graph partitioning algorithm, a separator vertex set approach or any other suitable approach for gathering like values within an array of values - as would be understood by the skilled person.

Figure 10C shows an example rearranged sparse matrix 1010 comprising a plurality of sub-matrices $1012_1$, $1012_2$, $1012_3$ and $1012_4$. The hypergraph model can be used to convert the sparse matrix 1002 into "singly-bordered block-diagonal matrix form" as shown in the rearranged sparse matrix 1010. A singly-bordered block-diagonal matrix form comprises: (i) a plurality of block arrays (e.g. $1012_1$, $1012_2$ and $1012_3$) arranged on a diagonal of the rearranged sparse matrix and which do not overlap in their columns or rows of the rearranged sparse matrix 1010, and (ii) one or more horizontal or vertical border arrays (e.g. $1012_4$) which are horizontally or vertically aligned across the rearranged sparse matrix 1010. The one or more block arrays and the border arrays are non-overlapping. The block arrays and the one or more horizontal or vertical border arrays are sub-matrices. In the example shown in Figure 10C there is one horizontal border array $1012_4$ but no vertical border array. In other examples of a singly-bordered block-diagonal matrix form, there may be a vertical border array but no horizontal border array.

The rearrangement of the rows and columns of the sparse matrix 1002 may comprise: performing permutations of the rows and of the columns of the sparse matrix 1002; and partitioning the rows and columns of the permuted sparse matrix to determine the set of sub-matrices 1012 shown in Figure 10C.

As would be understood by those skilled in the art, hypergraphs may be implemented using a row-net hypergraph model or a column-net hypergraph model. A row-net or a column-net hypergraph model may be used to re-arrange the sparse matrix 1002 into the rearranged sparse matrix 1010 in singly-bordered block-diagonal form matrix shown in Figure 10C. The same reordered sparse matrix 1010 will be produced whether a row-net or a column-net hypergraph is used.

In the example shown in Figure 10B, the hypergraph model may be a "rownet" hypergraph model. Forming a rownet hypergraph model comprises forming a vertex (denoted $v_1$ to $v_{10}$ in Figure 10B) representative of each column of the sparse matrix 1002 that comprises a non-zero element and forming a net (denoted $n_1$ to $n_{10}$ in Figure 10B) representative of each row of the sparse matrix 1002 that comprises a non-zero element. For each of the non-zero elements within the sparse matrix 1002, the vertex representative of the column of the sparse matrix 1002 comprising that non-zero element is connected to the net representative of the row of the sparse matrix 1002 comprising that non-zero element. For example, column 4 of the sparse matrix 1002 is represented by vertex $v_4$, and row 2 of the sparse matrix 1002 is represented by vertex $n_2$. It can be seen in Figure 10A that the element positioned in row 2, column 4 of the sparse matrix 1002 is a non-zero element. As such, by way of example, the vertex $v_4$ is connected to the net $n_2$ in the hypergraph shown in Figure 10B. To form the rownet hypergraph model shown in Figure 10B, the same vertex-net connecting process has been repeated for each of the non-zero elements in the sparse matrix 1002 - as will be understood by comparing Figures 10A and 10B.

Put another way, a rownet hypergraph model can be constructed for a matrix $A$ as follows. Let $H = (V, N)$ be a hypergraph $H$ with a vertex set $V$ and a net set $N$. Each column $A(:, i)$ is represented by a vertex $v_i \in V$ and each row $A(j, :)$ is represented by a net $n_j \in N$. A net $n_j$ connects a vertex $v_i$ if there is an element representative of a non-zero value $A(i, j)$ in the matrix $A$. Vertices connected by net $n_j$ can be denoted as $pins(n_j) = \{v_i \in V | \exists A(j, i) \in A(j, :)\}$.

It is to be understood that, when forming a hypergraph model (e.g. a rownet hypergraph model) for the sparse matrix, a vertex may not be formed for a column of the sparse matrix that does not comprise any non-zero elements (none shown in the Figures), and a net may not be formed for a row of the sparse matrix that does not comprise any non-zero elements (none shown in the Figures).

In another example, the hypergraph model is a "columnnet" hypergraph model. Forming a columnnet hypergraph model comprises forming a net representative of each column of the sparse matrix 1002 that comprises a non-zero element and forming a vertex representative of each row of the sparse matrix that comprises a non-zero element. For each of the non-zero elements within the sparse matrix, the net representative of the column of the sparse matrix comprising that non-zero element is connected to the vertex representative of the row of the sparse matrix comprising that non-zero element.

Put another way, a columnnet hypergraph model can be constructed for a matrix $A$ as follows. Let $H = (V, N)$ be a hypergraph $H$ with a vertex set $V$ and a net set $N$. Each row $A(j,:)$ is represented by a vertex $v_j \in V$ and each column $A(:,i)$ is represented by a net $n_i \in N$. A net $n_i$ connects a vertex $v_j$ if there is an element representative of a non-zero value $A(i, j)$ in the coefficient matrix $A$. Vertices connected by net $n_i$ can be denoted as $pins(n_i) = \{v_j \in V | \exists A(j, i) \in A(j,:)\}$.

It is to be understood that, when forming a hypergraph model (e.g. a columnnet hypergraph model) for the sparse matrix, a net may not be formed for a column of the sparse matrix that does not comprise any non-zero elements (none shown in the Figures), and/or a vertex may not be formed for a row of the sparse matrix that does not comprise any non-zero elements (none shown in the Figures).

Once formed, the hypergraph model can be partitioned. Figure 10B shows a hypergraph model that has been partitioned into three parts 1004, 1006 and 1008. It is to be understood that a hypergraph model may be partitioned into any suitable number of parts. The hypergraph model can be partitioned in dependence on a load balancing constraint that aims to minimise the number of nets that are connected to vertices within more than one of part - e.g. that aims to minimise the number of rows of the border array. The rows and/or columns of the sparse matrix can be rearranged in dependence on the partitioned hypergraph model so as to gather the non-zero elements of the sparse matrix into the sub-matrices.

The non-zero elements that are positioned in the rows of the sparse matrix 1002 that are represented by nets that are connected to vertices representative of columns of the sparse matrix 1002 within a single part of the partitioned hypergraph model can be gathered into one or more diagonal block arrays in the singly-bordered block-diagonal form matrix. Some of the non-zero elements that are positioned in the rows of the sparse matrix that are represented by nets that are connected only to vertices representative of columns of the sparse matrix within part 1004 are gathered into diagonal block array $1012_1$. For example, in Figure 10B, nets $n_1$, $n_2$ and $n_7$ are connected only to vertices within part 1004 - i.e. respectively, vertices $v_7$ and $v_{10}$; vertices $v_2$, $v_4$ and $v_{10}$; and vertices $v_2$, $v_4$ and $v_7$. As such, the rows and columns of the sparse matrix 1002 can be rearranged such that some of the non-zero elements that are positioned in rows 1, 2 and 7 are gathered into diagonal block array $1012_1$ - as shown in Figure 10C. In this case, it is the elements that are positioned in rows 7, 1 and 2, and in columns 2, 7, 10 and 4 of the sparse matrix that are gathered into diagonal block array $1012_1$. In an analogous way: part 1006 leads to the formation of diagonal block array $1012_2$ shown in Figure 10C, such that the rows and columns of the sparse matrix 1002 can be rearranged such that some of the non-zero elements that are positioned in rows 3, 6 and 8 are gathered into diagonal block array $1012_2$. In this case, it is the elements that are positioned in rows 6, 8 and 3, and columns 9, 3 and 1 of the sparse matrix that are gathered into diagonal block array $1012_2$. Similarly, part 1008 leads to the formation of diagonal block array $1012_3$ shown in Figure 10C, such that the rows and columns of the sparse matrix 1002 can be rearranged such that some of the non-zero elements that are positioned in rows 5 and 9 are gathered into diagonal block array $1012_3$. In this case, it is the elements that are positioned in rows 9 and 5, and columns 6, 8 and 5 of the sparse matrix that are gathered into diagonal block array $1012_3$.

The non-zero elements that are positioned in the rows of the sparse matrix 1002 that are represented by nets that are connected to vertices representative of columns of the sparse matrix 1002 within more than one part of the partitioned hypergraph model can be gathered into the horizontal border array $1012_4$ in the singly-bordered block-diagonal form matrix. For example, in Figure 10B, net $n_4$ is connected to vertices within parts 1004 and 1006 - i.e. vertices $v_1$, $v_7$, $v_9$ and $v_{10}$. As shown in Figure 10B, net $n_{10}$ is also connected to vertices within more than one part. As such, the rows and columns of the sparse matrix 1002 are rearranged such that the non-zero elements that are positioned in rows 4 and 10 are gathered into the horizontal border array $1012_4$.

It is noted that within a part, the rows or columns can be any in any order, so for example, row 7 could come after rows 1 and 2 within the diagonal block array $1012_1$,

and as another example, column 9 could come after columns 3 and 1 within the diagonal block array $1012_2$. It is also to be understood that any row or column of the sparse matrix 1002 that does not include any non-zero elements (e.g. any row or column for which a net or vertex, as appropriate, was not formed when forming the hypergraph model) can be rearranged (e.g. arbitrarily) to any row or column position within the rearranged sparse matrix 1010. Alternatively, a further "empty" block array (not shown in the Figures) may be formed into which elements of the rows and columns that do not include any non-zero elements can be gathered. Said "empty" block array may be used in an equivalent manner as the "non-empty" block arrays during the future computations, or not used in (e.g. discarded from) the future computations.

Put another way, a $K$-way vertex partition of a hypergraph model $H$ can be defined as $\Pi(H) = \{V_1, V_2, \cdots V_K\}$ consisting of mutually disjoint and exhaustive subsets of vertices $V_m \in V$ where $V_m \cap V_n = \emptyset$ if $m \neq n$ and $V_m \neq \emptyset$ for all $V_m \in \Pi(H)$ such that $\bigcup_{V_m \in \Pi(H)} V_m = V$. Under a partition $\Pi(H)$, the set of parts that are connected by a net $n_j$ can be defined as the connectivity set $\Lambda(n_j)$ and the number of parts that are connected by net $n_j$ can be defined as connectivity $\lambda(n_j) = |\Lambda(n_j)|$. A net $n_j$ is said to be cut (external) if it connects to multiple parts (i.e., $\lambda(n_j) > 1$) and uncut (internal) otherwise (i.e., $\lambda(n_j) = 1$). A net $n_j$ is an internal net of a part $V_m$ if it connects only vertices in part $V_m$ (i.e., $\Lambda(n_j) = V_m$ and $pins(n_j) = V_m$). The set of internal nets of a part $V_m$ is denoted as $N_m$, and the set of external nets of a partition $\Pi(H)$ is denoted as $N_S$. Therefore, a $K$-way vertex partition $\Pi(H)$ can also induces a $(K + 1)$-way partition $\{N_1, N_2, \cdots N_K; N_S\}$ on the net set $N$. Here, $N_S$ is a net separator whose removal gives $K$ disconnected vertex parts $V_1, V_2, \cdots V_K$ as well as $K$ disconnected net parts $N_1, N_2, \cdots N_K$.

A hypergraph model $H$ can be partitioned with the objective of minimizing the number of cut nets under the load balancing constraint $W(V_m) \leq W_{avg}(1 + \varepsilon), \forall V_m \in \Pi(H)$ where the weight of a part $V_m$ is $W(V_m) = \sum_{V_i \in V_m} w(v_i)$, the average part weight is $W_{avg} = \sum_{V_i \in V} w(v_i)/K$, and the maximum allowed imbalance ratio is $\varepsilon$. The weight of each vertex $v_i$ can be determined as $w(v_i) = 1$. The aim of the load-balancing constraint may be to produce equal-sized block arrays, e.g. which can each fit in a buffer of a neural network accelerator (NNA).

The $K$-way partition $\Pi(H) = \{V_1, V_2, \cdots V_K\} = \{N_1, N_2, \cdots N_K; N_S\}$ can induce a partial ordering on the rows and columns of the sparse matrix $S$. In this ordering, in examples where the hypergraph model is formed as a rownet hypergraph model, the columns associated with the vertices in $V_{m+1}$ can be ordered after the columns associated with the vertices in $V_m$ for $m = 1, 2, \cdots K - 1$. Similarly, the rows represented with the internal nets $N_{m+1}$ of part $V_{m+1}$ can be ordered after the rows associated with the internal nets $N_m$ of part $V_m$ for $m = 1, 2, \cdots K - 1$. The rows associated with the external nets $N_S$ are ordered last as the border array. In other words, a vertex $v_i \in V_m$

means permuting column $S(:, i)$ to the mth column slice, an internal net $n_j \in N_m$ means permuting row $S(j, :)$ to the mth row slice and an external net $n_j \in N_S$ means permuting row $S(j, :)$ to border matrix.

In some examples, the row ordering can be applied to the columns of the singly-bordered block diagonal matrix to thereby determine the sparse matrix in a doubly-bordered block-diagonal matrix form.

The rearranged sparse matrix 1010 comprises a plurality of sub-matrices $1012_1$, $1012_2$, $1012_3$ and $1012_4$. It can be appreciated that the rearranged sparse matrix 1010 shown in Figure 10C can be formed by rearranging (e.g. reordering) the rows and columns of the sparse matrix 1002 shown in Figure 10A. That is, Figure 10C shows the 10 rows and 10 columns of the sparse matrix 1002 in a different order. For example, column 2 of the sparse matrix 1002, having non-zero elements in rows 2 and 7, has been shifted "left" and is now the first column in rearranged sparse matrix 1010. In another example, row 10 of sparse matrix 1002, having elements representative of non-zero values in columns 3, 6 and 5, has been shifted "down" and is now the final row in rearranged sparse matrix 1010. By rearranging the rows and columns as described herein, the non-zero elements of the sparse matrix are gathered into sub-matrices $1012_1$, $1012_2$, $1012_3$ and $1012_4$.

The sparse matrix 1002 comprises 27 non-zero elements, and a total of 100 (i.e. 10x10) elements. As such, the "non-zero density" of sparse matrix 1002 is 0.27. The set of sub-matrices $1012_1$, $1012_2$, $1012_3$ and $1012_4$ also comprises 27 non-zero elements, but in a total of 47 (i.e. (3x4)+(3x3)+(2x3)+(2x10)) elements. As such, the "non-zero density" of the set of sub-matrices $1012_1$, $1012_2$, $1012_3$ and $1012_4$ is 0.47. Thus, the "non-zero density" of the set of sub-matrices $1012_1$, $1012_2$, $1012_3$ and $1012_4$, as a whole, is greater than the "non-zero density" of the sparse matrix 1002.

Furthermore, sub-matrix $1012_1$ comprises 8 non-zero elements, and a total of 12 (i.e. 3x4) elements. As such, the "non-zero density" of sub-matrix $1012_1$ is 0.67. Sub-matrix $1012_2$ comprises 7 non-zero elements, and a total of 9 (i.e. 3x3) elements. As such, the "non-zero density" of sub-matrix $1012_2$ is 0.78. Sub-matrix $1012_3$ comprises 5 non-zero elements, and a total of 6 (i.e. 2x3) elements. As such, the "non-zero density" of sub-matrix $1012_3$ is 0.83. Sub-matrix $1012_4$ comprises 7 non-zero elements, and a total of 20 (i.e. 2x10) elements. As such, the "non-zero density" of sub-matrix $1012_4$ is 0.35. Thus, the "non-zero density" of each of the sub-matrices $1012_1$, $1012_2$, $1012_3$ and $1012_4$ is greater than the "non-zero density" of the sparse matrix 1002. However, in some other examples, the "non-zero density" of one or more of the individual sub-matrices may be less than the "non-zero density" of the sparse matrix 1002.

It is to be understood that the use of a hypergraph model is not essential. Other methods exist for rearranging the rows and/or columns of the sparse matrix 1002 so as to gather the non-zero elements of the sparse matrix into the sub-matrices. For example, a hypergraph clustering algorithm or graph partitioning algorithm could alternatively be used for this purpose. As another example, the rearranging of the rows and columns of the sparse matrix could be performed by finding vertex separators on a net intersection graph of the hypergraph model. A person skilled in the art would understand how these different techniques could be used to rearrange the rows and columns of the sparse matrix.

When the rows and columns of the sparse matrix are ordered (i.e. reordered) so as to gather the non-zero elements of the sparse matrix into a set of sub-matrices as described above, then the rows and columns of the dense matrix and the output matrix are ordered in accordance with the ordering of the rows and columns of the sparse matrix. In particular, the rows and columns of the dense matrix and the output matrix are ordered such that if following the matrix multiplication the rows and columns of the output matrix were reordered back to their original order then the resulting values of the output matrix would be the same as if none of the sparse matrix, dense matrix and output matrix had had their rows and/or columns reordered. The reordering of the rows groups similar rows of the sparse matrix together, so that the non-zero elements within a sub-matrix tend to be in the same or similar columns. This means that the threads that are processing the rows of that sub-matrix of the sparse matrix will tend to access the same or similar rows of the dense matrix in the matrix multiplications. This can lead to efficiencies both in terms of accessing the data of the sparse matrix and in terms of accessing the data of the dense matrix.

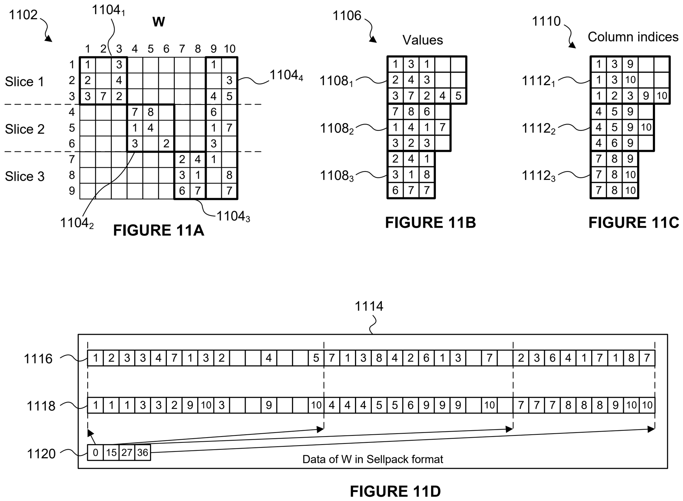

The idea of reordering the rows and columns of the matrices can be combined with the idea of using the sellpack format for the data of the sparse matrix. Figure 11A shows another example of sparse matrix 1102 whose rows and columns are ordered so as to gather the non-zero elements into a set of sub-matrices $1104_1$, $1104_2$, $1104_3$ and $1104_4$. In this example, the rows and columns of the sparse matrix 1102 have been reordered into a singly-bordered block-diagonal matrix form which has three diagonal block arrays (corresponding to sub-matrices $1104_1$, $1104_2$ and $1104_3$) and a vertical border array (corresponding to sub-matrix $1104_4$). The sparse matrix 1102 does not have a horizontal border array. The rows and columns of the sparse matrix 1102 may have been reordered using a hypergraph model as described above, or using some other technique, to gather the non-zero elements into the sub-matrices $1104_1$, $1104_2$, $1104_3$ and $1104_4$. It can be seen in Figure 11A that the set of sub-matrices ($1104_1$, $1104_2$, $1104_3$ and $1104_4$) has a greater average density of non-zero elements than the sparse matrix 1102.

As described above, in accordance with the sellpack format, the sparse matrix 1102 is divided into slices, where each of the slices represents a set of N rows of the sparse matrix. In the example shown in Figure 11A, N=3. Each of the slices of the sparse matrix in the sellpack format corresponds to the rows of a respective one of the sub-matrices.

Figure 11B shows the values of the sparse matrix of Figure 11A in a condensed form 1106. In particular, the values of the first slice of the sparse matrix 1102 are condensed into a condensed values block $1108_1$. For each row of the first slice of the sparse matrix, the zero elements are removed, and then each row is padded up with zero elements if necessary to have five elements in each row (because the maximum number of non-zero elements in a row of the first slice of the sparse matrix is five). The values of the second slice of the sparse matrix 1102 are condensed into a condensed values block $1108_2$. For each row of the second slice of the sparse matrix, the zero elements are removed, and then each row is padded up with zero elements if necessary to have four elements in each row (because the maximum number of non-zero elements in a row of the second slice of the sparse matrix is four). The values of the third slice of the sparse matrix 1102 are condensed into a condensed values block $1108_3$. For each row of the third slice of the sparse matrix, the zero elements are removed, and then each row is padded up with zero elements if necessary to have three elements in each row (because the maximum number of non-zero elements in a row of the third slice of the sparse matrix is three).

Figure 11C shows the column indices of the sparse matrix of Figure 11A in a condensed form 1110. In particular, the column indices of the non-zero elements of the first slice of the sparse matrix 1102 are condensed into a condensed column indices block $1112_1$. The positions and the padding of the column indices in the condensed column indices block $1112_1$ match the positions and the padding of the values in the condensed values block $1108_1$. As such, each row of the condensed column indices block $1112_1$ has five elements. The column indices of the non-zero elements of the second slice of the sparse matrix 1102 are condensed into a condensed column indices block $1112_2$. The positions and the padding of the column indices in the condensed column indices block $1112_2$ match the positions and the padding of the values in the condensed values block $1108_2$. As such, each row of the condensed column indices block $1112_2$ has four elements. The column indices of the non-zero elements of the third slice of the sparse matrix 1102 are condensed into a condensed column indices block $1112_3$. The positions and the padding of the column indices in the condensed column indices block $1112_3$ match the positions and the padding of the values in the condensed values block $1108_3$. As such, each row of the condensed column indices block $1112_3$ has three elements.

Figure 11D shows the data 1114 of the sparse matrix of Figure 11A in the sellpack format. In particular, the data 1114 of the sparse matrix 1102 in the sellpack format comprises a string of values 1116, a string of column indices 1118 corresponding to the values, and a set of slice offsets 1114. The string of values 1116 comprises the non-zero elements of the sparse matrix 1102, and the column indices indicate the columns in which the corresponding non-zero elements are located. The rows in which the non-zero elements are located can be inferred from the position of the value of the non-zero element in the string of values and the number of rows of the sparse matrix in each slice (which in this example is three). As described above, according to the sellpack format, for each of the slices, a section of the string of values 1116 comprises the non-zero elements of the slice of the sparse matrix in column-major order, and a section of the string of column indices 1118 comprises column indices corresponding to the non-zero elements of the slice of the sparse matrix in column-major order. The slice offsets indicate where the data for each slice starts within the string of values and within the string of column indices.

For example, the first slice offset in the set of slice offsets 1120 is '0' indicating that the start of the data for the first slice starts at position 0 in the string of values 1116 and in the string of column indices 1118. Starting from position 0, the string of values 1116 comprises the fifteen values of the condensed values block $1108_1$ in column-major order, and the string of column indices 1118 comprises the fifteen column indices of the condensed column indices block $1112_1$ in column-major order. The second slice offset in the set of slice offsets 1120 is '15' indicating that the start of the data for the second slice starts at position 15 in the string of values 1116 and in the string of column indices 1118. Starting from position 15, the string of values 1116 comprises the twelve values of the condensed values block $1108_2$ in column-major order, and the string of column indices 1118 comprises the twelve column indices of the condensed column indices block $1112_2$ in column-major order. The third slice offset in the set of slice offsets 1120 is '27' indicating that the start of the data for the third slice starts at position 27 in the string of values 1116 and in the string of column indices 1118. Starting from position 27, the string of values 1116 comprises the nine values of the condensed values block $1108_3$ in column-major order, and the string of column indices 1118 comprises the nine column indices of the condensed column indices block $1112_3$ in column-major order. The fourth slice offset in the set of slice offsets 1120 is '36' indicating that the start of the data for a next slice starts at position 36 in the string of values 1116 and in the string of column indices 1118. In the example shown in Figure 11D the slice offsets are shown as absolute values, but they could be represented in any suitable manner, e.g. as delta values (or differences) from the previous slice offset.

It can be seen that the rows and columns of the sparse matrix may be ordered (e.g. according to the hypergraph partitioning approach described above) and the resulting sparse matrix can be partitioned into the slices of the sellpack data structure, where each of the slices of the sparse matrix in the sellpack format corresponds to the rows of a respective one of the sub-matrices according to the hypergraph partitioning. In this way similar rows of the sparse matrix are grouped together, so that the non-zero elements within each slice tend to be in the same or similar columns. Therefore, the threads processing the rows of a slice of the sparse matrix access values from the same/similar rows of the dense matrix. Threads processing rows of the same slice of the sparse matrix are part of the same workgroup. Threads of a workgroup are processed by the same execution module. Threads processing rows of different slices of the sparse matrix may be part of different workgroups, and may be processed by different execution modules. The combination of the hypergraph partitioning and the sellpack data structure improves the cache performance for the values of the dense matrix, i.e. it allows values of a row of the dense matrix to be fetched once and reused multiple times. Furthermore, due to the ordering of the columns of the sparse matrix, the rows of the dense matrix are also rearranged in a compatible manner, and as such the rows of the dense matrix that are accessed by a workgroup are now physically closer to each other. As described above, this can lead to efficiencies in accessing the data for the dense matrix, e.g. from a texture cache. For example, this can lead to faster access to row 1 of the dense matrix when row 0 is already accessed, e.g. due to the design of caches such as the texture caches described above from which efficiencies can be achieved by access blocks of sequential data. For example, when a pixel is accessed from a texture cache, pixels that are close by are accessed more efficiently.

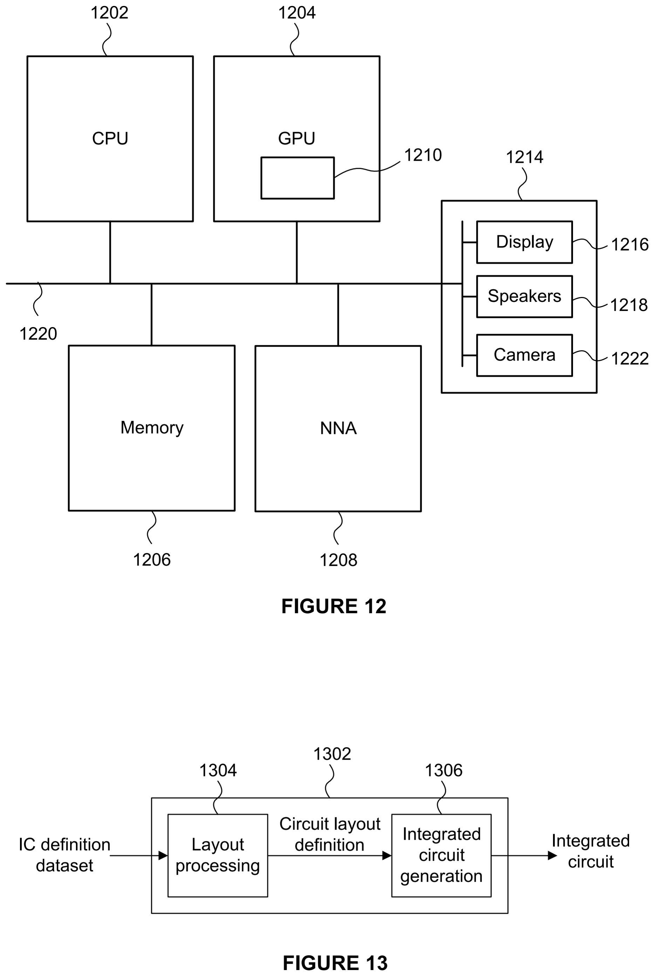

Figure 12 shows a computer system in which the processing systems described herein may be implemented. The computer system comprises a CPU 1202, a GPU 1204, a memory 1206 (e.g. equivalent to memory 104 shown in Figure 1 or memory 804 shown in Figure 8), a neural network accelerator (NNA) 1208, and other devices 1214, such as a display 1216, speakers 1218 and a camera 1222. The processing unit 102 may correspond to any of the CPU 1202, the GPU 1204 or the NNA 1208. A processing block 1210 (corresponding to the execution module 106 of the processing system 100) is implemented on the GPU 1204. In other examples, the processing block 1210 could be implemented on the CPU 1202 or the NNA 1208. The GPU 1204 may comprise specific hardware logic, for example equivalent to NNA 1208, for accelerating (at least aspects of) the implementation of neural networks. It is to be understood that one or more of the depicted components may be omitted from the system. The components of the computer system can communicate with each other via a communications bus 1220.

The processing systems 100 and 800 are shown as comprising a number of functional blocks. This is schematic only and is not intended to define a strict division between different logic elements of such entities. Each functional block may be provided in any suitable manner. It is to be understood that intermediate values described herein as being formed by the processing units need not be physically generated by the processing unit at any point and may merely represent logical values which conveniently describe the processing performed by the processing unit between its input and output.

The processing units described herein may be embodied in hardware on an integrated circuit. The processing units described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a processing unit configured to perform any of the methods described herein, or to manufacture a processing unit comprising any apparatus described herein. An integrated circuit definition dataset may be, for example, an integrated circuit description.

Therefore, there may be provided a method of manufacturing, at an integrated circuit manufacturing system, a processing unit as described herein. Furthermore, there may be provided an integrated circuit definition dataset that, when processed in an integrated circuit manufacturing system, causes the method of manufacturing a processing unit to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a processing unit will now be described with respect to Figure 13.

Figure 13 shows an example of an integrated circuit (IC) manufacturing system 1302 which is configured to manufacture a processing unit as described in any of the examples herein. In particular, the IC manufacturing system 1302 comprises a layout processing system 1304 and an integrated circuit generation system 1306. The IC manufacturing system 1302 is configured to receive an IC definition dataset (e.g. defining a processing unit as described in any of the examples herein), process the IC definition dataset, and generate an IC according to the IC definition dataset (e.g. which embodies a processing unit as described in any of the examples herein). The processing of the IC definition dataset configures the IC manufacturing system 1302 to manufacture an integrated circuit embodying a processing unit as described in any of the examples herein.

The layout processing system 1304 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1304 has determined the circuit layout it may output a circuit layout definition to the IC generation system 1306. A circuit layout definition may be, for example, a circuit layout description.

The IC generation system 1306 generates an IC according to the circuit layout definition, as is known in the art. For example, the IC generation system 1306 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1306 may be in the form of computer-readable code which the IC generation system 1306 can use to form a suitable mask for use in generating an IC.

The different processes performed by the IC manufacturing system 1302 may be implemented all in one location, e.g. by one party. Alternatively, the IC manufacturing system 1302 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a processing unit without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 13 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 13, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein.

In view of the foregoing description it will be evident to a person skilled in the art that various modifications may be made within the scope of the invention.

ANNEX

Some numbered clauses are provided below, which form part of this disclosure:

1. A processing unit configured to multiply a sparse matrix and a dense matrix to determine an output matrix, wherein the processing unit comprises:

an execution module configured to execute threads of a workgroup, wherein the threads of the workgroup are allocated to respective sections of the output matrix, wherein each of the sections is a portion of a row of the output matrix; and
a cache configured to store portions of rows of the dense matrix;
wherein the sparse matrix comprises a plurality of non-zero elements and a plurality of elements which are zero, wherein the rows and columns of the sparse matrix are ordered so as to gather the plurality of non-zero elements of the sparse matrix into a set of sub-matrices, the set of sub-matrices having a greater average density of non-zero elements than the sparse matrix, wherein the rows and columns of the dense matrix and the output matrix are ordered in accordance with the ordering of the rows and columns of the sparse matrix,
wherein each of the threads of the workgroup is arranged to:

access data representing one or more non-zero elements of a corresponding row of the sparse matrix, wherein a row-position of the corresponding row of the sparse matrix matches a row-position of the portion of the row of the output matrix of the section to which the thread is allocated;
for each of the one or more non-zero elements of the corresponding row of the sparse matrix:

access from the cache a portion of a related row of the dense matrix; and
multiply the non-zero element with the portion of the related row of the dense matrix, wherein a row-position of the related row in the dense matrix matches a column-position of the non-zero element in the sparse matrix, and wherein a column-position of the portion of the related row of the dense matrix matches a column-position of the portion of the row of the output matrix of the section to which the thread is allocated; and

sum results of the multiplications to determine the elements of the section of the output matrix to which the thread is allocated.

2. The processing unit of clause 1 wherein the sparse matrix is divided into slices, where each of the slices represents a set of $N$ rows of the sparse matrix, where $N$ is an integer, and wherein the data of the sparse matrix is in a sellpack format comprising:

a string of values and a string of column indices corresponding to the values, wherein the string of values comprises the non-zero elements of the sparse matrix, and
wherein for each of the slices, a section of the string of values comprises the non-zero elements of the slice of the sparse matrix in column-major order, and a section of the string of column indices comprises column indices corresponding to the non-zero elements of the slice of the sparse matrix in column-major order, wherein each of the slices of the sparse matrix in the sellpack format corresponds to the rows of a respective one of the sub-matrices.

3. The processing unit of clause 2 wherein the data of the sparse matrix in the sellpack format further comprises a set of slice offsets to indicate the positions of the sections within the string of values and within the string of column indices that relate to the respective slices.

4. The processing unit of any of clauses 1 to 3 wherein the rows and columns of the sparse matrix are ordered into a singly-bordered block-diagonal matrix form.

5. The processing unit of any of clauses 1 to 4 wherein the rows and columns of the sparse matrix are ordered so as to gather the plurality of non-zero elements of the sparse matrix into a set of sub-matrices in dependence on a hypergraph model.

6. The processing unit of any of clauses 1 to 5 wherein the processing unit comprises a set of one or more caches configured to store data of the sparse matrix, wherein each of the threads of the workgroup is arranged to access the data representing the one or more non-zero elements of a corresponding row of the sparse matrix from the set of one or more caches.

7. The processing unit of clause 6 wherein sequential threads of the workgroup are arranged to access data representing non-zero elements of the sparse matrix from sequential locations of the set of one or more caches.

8. The processing unit of clause 6 or 7 wherein the cache that is configured to store portions of rows of the dense matrix is separate to the set of one or more caches configured to store data of the sparse matrix, wherein the processing unit is configured such that data of the sparse matrix is not stored in the cache that is configured to store portions of rows of the dense matrix, and data of the dense matrix is not stored in the set of one or more caches configured to store data of the sparse matrix.

9. The processing unit of any of clauses 1 to 8 wherein multiple threads of the workgroup are allocated to respective portions of the same row of the output matrix.

10. The processing unit of any of clauses 1 to 9 wherein the workgroup comprises multiple warps, wherein each of the warps comprises a plurality of the threads allocated to portions of different rows of the output matrix, and
wherein for each of a plurality of the rows of the output matrix, threads of different warps are allocated to respective portions of that row of the output matrix.

11. The processing unit of any of clauses 1 to 10 wherein each of the threads of the workgroup is arranged to, for each of the one or more non-zero elements of the corresponding row of the sparse matrix, multiply the non-zero element with a portion of the related row of the dense matrix using a vectorised operation to simultaneously multiply the non-zero element with a vector having elements of the portion of the related row of the dense matrix, such that the results of the multiplications are vectors.

12. The processing unit of any of clauses 1 to 11 wherein each of the threads of the workgroup is arranged to perform element-wise addition of the results of the multiplications to sum the results of the multiplications to determine the elements of the section of the output matrix to which the thread is allocated.

13. The processing unit of any of clauses 1 to 12 wherein the sections of the output matrix to which the threads of the workgroup are allocated are non-overlapping and contiguous.

14. The processing unit of any of clauses 1 to 13 wherein the processing unit is a graphics processing unit.

15. The processing unit of clause 14 wherein the cache that is configured to store portions of rows of the dense matrix is a texture cache, wherein the texture cache is configured to allow access to elements of a group of adjacent elements of a portion of a row of the dense matrix together.

16. The processing unit of clause 15 wherein the texture cache is configured to allow random access to groups of adjacent elements of rows of the dense matrix.

17. The processing unit of any of clauses 1 to 16 wherein the execution module comprises a plurality of registers, and
wherein, each of the threads of the workgroup is arranged to, for multiplying each of the one or more non-zero elements of the corresponding row of the sparse matrix with a portion of the related row of the dense matrix, store data representing the non-zero element of the corresponding row of the sparse matrix in a first set of one or more of the registers, and store data representing the portion of the related row of the dense matrix in a second set of one or more of the registers.

18. The processing unit of any of clauses 1 to 17 wherein the number of threads in the workgroup is equal to the number of threads that can be executed simultaneously on the execution module.

19. A computer-implemented method of multiplying a sparse matrix and a dense matrix on a processing unit to determine an output matrix, wherein the processing unit comprises an execution module and a cache, wherein the method comprises:

  executing threads of a workgroup on the execution module, wherein the threads of the workgroup are allocated to respective sections of the output matrix, wherein each of the sections is a portion of a row of the output matrix;
  wherein, for each of the threads of the workgroup, said executing the thread comprises:

    accessing data representing one or more non-zero elements of a corresponding row of the sparse matrix, wherein a row-position of the corresponding row of the sparse matrix matches a row-position of the portion of the row of the output matrix of the section to which the thread is allocated, wherein the sparse matrix comprises a plurality of non-zero elements and a plurality of elements which are zero, wherein the rows and columns of the sparse matrix are ordered so as to gather the plurality of non-zero elements of the sparse matrix into a set of sub-matrices, the set of sub-matrices having a greater average density of non-zero elements than the sparse matrix, wherein the rows and columns of the dense matrix and the output matrix are ordered in accordance with the ordering of the rows and columns of the sparse matrix;

for each of the one or more non-zero elements of the corresponding row of the sparse matrix:

accessing from the cache a portion of a related row of the dense matrix; and multiplying the non-zero element with the portion of the related row of the dense matrix, wherein a row-position of the related row in the dense matrix matches a column-position of the non-zero element in the sparse matrix, and wherein a column-position of the portion of the related row of the dense matrix matches a column-position of the portion of the row of the output matrix of the section to which the thread is allocated; and

summing results of the multiplications to determine the elements of the section of the output matrix to which the thread is allocated.

20. The method of clause 19 wherein the sparse matrix is divided into slices, where each of the slices represents a set of $N$ rows of the sparse matrix, where $N$ is an integer, and wherein the data of the sparse matrix is in a sellpack format comprising:

a string of values and a string of column indices corresponding to the values, wherein the string of values comprises the non-zero elements of the sparse matrix, and wherein for each of the slices, a section of the string of values comprises the non-zero elements of the slice of the sparse matrix in column-major order, and a section of the string of column indices comprises column indices corresponding to the non-zero elements of the slice of the sparse matrix in column-major order, wherein each of the slices of the sparse matrix in the sellpack format corresponds to the rows of a respective one of the sub-matrices.

21. The method of clause 19 or 20 wherein multiple threads of the workgroup are allocated to respective portions of the same row of the output matrix.

22. The method of any of clauses 19 to 21 wherein the processing unit is a graphics processing unit, wherein the cache is a texture cache configured to store portions of rows of the dense matrix, wherein the texture cache is configured to allow access to elements of a group of adjacent elements of a portion of a row of the dense matrix together.

23. A method of manufacturing, using an integrated circuit manufacturing system, a processing unit as stated in any of clauses 1 to 18.

24. Computer readable code configured to cause the method of any of clauses 19 to 23 to be performed when the code is run.

25. An integrated circuit definition dataset that, when processed in an integrated circuit manufacturing system, configures the integrated circuit manufacturing system to manufacture a processing unit as stated in any of clauses 1 to 18.

101. A processing unit configured to multiply a sparse matrix and a dense matrix to determine an output matrix, wherein the processing unit comprises:

an execution module configured to execute threads of a workgroup, wherein the threads of the workgroup are allocated to respective sections of the output matrix, wherein each of the sections is a portion of a row of the output matrix; and
a set of one or more caches configured to store data of the sparse matrix;
wherein each of the threads of the workgroup is arranged to:

access data from the set of one or more caches representing one or more non-zero elements of a corresponding row of the sparse matrix, wherein a row-position of the corresponding row of the sparse matrix matches a row-position of the portion of the row of the output matrix of the section to which the thread is allocated;
for each of the one or more non-zero elements of the corresponding row of the sparse matrix, multiply the non-zero element with a portion of a related row of the dense matrix, wherein a row-position of the related row in the dense matrix matches a column-position of the non-zero element in the sparse matrix, and wherein a column-position of the portion of the related row of the dense matrix matches a column-position of the portion of the row of the output matrix of the section to which the thread is allocated; and
sum results of the multiplications to determine the elements of the section of the output matrix to which the thread is allocated;

wherein multiple threads of the workgroup are allocated to respective portions of the same row of the output matrix.

102. The processing unit of clause 101 wherein the sparse matrix is divided into slices, where each of the slices represents a set of $N$ rows of the sparse matrix, where $N$ is an integer, and wherein the data of the sparse matrix is in a sellpack format comprising:

a string of values and a string of column indices corresponding to the values, wherein the string of values comprises the non-zero elements of the sparse matrix, and
wherein for each of the slices, a section of the string of values comprises the non-zero elements of the slice of the sparse matrix in column-major order, and a section of the string of column indices comprises column indices corresponding to the non-zero elements of the slice of the sparse matrix in column-major order.

103. The processing unit of clause 101 or 102 wherein sequential threads of the workgroup are arranged to access data representing non-zero elements of the sparse matrix from sequential locations of the set of one or more caches.

104. The processing unit of any of clauses 101 to 103 wherein the workgroup comprises multiple warps, wherein each of the warps comprises a plurality of the threads allocated to portions of different rows of the output matrix, and
wherein for each of a plurality of the rows of the output matrix, threads of different warps are allocated to respective portions of that row of the output matrix.

105. The processing unit of any of clauses 101 to 104 wherein each of the threads of the workgroup is arranged to, for each of the one or more non-zero elements of the corresponding row of the sparse matrix, multiply the non-zero element with a portion of the related row of the dense matrix using a vectorised operation to multiply the non-zero element with a vector having elements of the portion of the related row of the dense matrix, such that the results of the multiplications are vectors.

106. The processing unit of any of clauses 101 to 105 wherein each of the threads of the workgroup is arranged to perform element-wise addition of the results of the multiplications to sum the results of the multiplications to determine the elements of the section of the output matrix to which the thread is allocated.

107. The processing unit of any of clauses 101 to 106 wherein the sections of the output matrix to which the threads of the workgroup are allocated are non-overlapping and contiguous.

108. The processing unit of any of clauses 101 to 107 wherein the processing unit is a graphics processing unit.

109. The processing unit of clause 108 wherein the graphics processing unit further comprises a texture cache configured to store portions of rows of the dense matrix, wherein each of the threads of the workgroup is arranged to, for each of the one or more non-zero elements of the corresponding row of the sparse matrix, access from the texture cache said portion of the related row of the dense matrix to be multiplied with the non-zero element,
wherein the texture cache is configured to allow access to elements of a group of adjacent elements of a portion of a row of the dense matrix together.

110. The processing unit of clause 109 wherein the texture cache is configured to allow random access to groups of adjacent elements of rows of the dense matrix.

111. The processing unit of clause 109 or 110 wherein the texture cache is separate to the set of one or more caches, wherein the graphics processing unit is configured such that data of the sparse matrix is not stored in the texture cache and data of the dense matrix is not stored in the set of one or more caches.

112. The processing unit of any of clauses 101 to 111 wherein the execution module comprises a plurality of registers, and
wherein, each of the threads of the workgroup is arranged to, for multiplying each of the one or more non-zero elements of the corresponding row of the sparse matrix with a portion of the related row of the dense matrix, store data representing the non-zero element of the corresponding row of the sparse matrix in a first set of one or more of the registers, and store data representing the portion of the related row of the dense matrix in a second set of one or more of the registers.

113. The processing unit of clause 112 wherein the registers of the execution module are not configured to store all of the data of the dense matrix or all of the data of the sparse matrix at any given time.

114. The processing unit of any of clauses 101 to 113 wherein the sparse matrix comprises a plurality of non-zero elements and a plurality of elements which are zero, wherein the rows and columns of the sparse matrix have been ordered so as to gather the plurality of non-zero elements of the sparse matrix into a set of sub-matrices, the set of sub-matrices having a greater average density of non-zero elements than the sparse matrix,
wherein the rows and columns of the dense matrix and the output matrix have been ordered in accordance with the ordering of the rows and columns of the sparse matrix.

115. The processing unit of clause 114 when dependent upon clause 102 wherein each of the slices of the sparse matrix in the sellpack format corresponds to the rows of a respective one of the sub-matrices.

116. The processing unit of clause 114 or 115 wherein the rows and columns of the sparse matrix have been ordered into a singly-bordered block-diagonal matrix form.

117. The processing unit of any of clauses 114 to 116, wherein the rows and columns of the sparse matrix have been ordered so as to gather the plurality of non-zero elements of the sparse matrix into a set of sub-matrices in dependence on a hypergraph model.

118. The processing unit of any of clauses 101 to 117 wherein the number of threads in the workgroup is equal to the number of threads that can be executed simultaneously on the execution module.

119. A computer-implemented method of multiplying a sparse matrix and a dense matrix on a processing unit to determine an output matrix, wherein the processing unit comprises an execution module and a set of one or more caches, wherein the method comprises:

> executing threads of a workgroup on the execution module, wherein the threads of the workgroup are allocated to respective sections of the output matrix, wherein each of the sections is a portion of a row of the output matrix;
> wherein, for each of the threads of the workgroup, said executing the thread comprises:

>> accessing data from the set of one or more caches representing one or more non-zero elements of a corresponding row of the sparse matrix, wherein a row-position of the corresponding row of the sparse matrix matches a row-position of the portion of the row of the output matrix of the section to which the thread is allocated;
>> for each of the one or more non-zero ele-

>> ments of the corresponding row of the sparse matrix, multiplying the non-zero element with a portion of a related row of the dense matrix, wherein a row-position of the related row in the dense matrix matches a column-position of the non-zero element in the sparse matrix, and wherein a column-position of the portion of the related row of the dense matrix matches a column-position of the portion of the row of the output matrix of the section to which the thread is allocated; and
>> summing results of the multiplications to determine the elements of the section of the output matrix to which the thread is allocated;

> wherein multiple threads of the workgroup are allocated to respective portions of the same row of the output matrix.

120. The method of clause 119 wherein the sparse matrix is divided into slices, where each of the slices represents a set of $N$ rows of the sparse matrix, where $N$ is an integer, and wherein the data of the sparse matrix is in a sellpack format comprising:

> a string of values and a string of column indices corresponding to the values, wherein the string of values comprises the non-zero elements of the sparse matrix, and
> wherein for each of the slices, a section of the string of values comprises the non-zero elements of the slice of the sparse matrix in column-major order, and a section of the string of column indices comprises column indices corresponding to the non-zero elements of the slice of the sparse matrix in column-major order.

121. The method of clause 120 wherein the sparse matrix comprises a plurality of non-zero elements and a plurality of elements which are zero, wherein the rows and columns of the sparse matrix have been ordered so as to gather the plurality of non-zero elements of the sparse matrix into a set of sub-matrices in dependence on a hypergraph model, the set of sub-matrices having a greater average density of non-zero elements than the sparse matrix,

> wherein each of the slices of the sparse matrix in the sellpack format corresponds to the rows of a respective one of the sub-matrices, and
> wherein the rows and columns of the dense matrix and the output matrix have been ordered in accordance with the ordering of the rows and columns of the sparse matrix.

122. The method of any of clauses 119 to 121 wherein the processing unit is a graphics processing unit which further comprises a texture cache configured to store portions of rows of the dense matrix, wherein the texture cache is separate to the set of one or more caches,

wherein, for each of the threads of the workgroup, said executing the thread further comprises, for each of the one or more non-zero elements of the corresponding row of the sparse matrix, accessing from the texture cache said portion of the related row of the dense matrix to be multiplied with the non-zero element, and wherein the texture cache is configured to allow access to elements of a group of adjacent elements of a portion of a row of the dense matrix together.

123. A method of manufacturing, using an integrated circuit manufacturing system, a processing unit as stated in any of clauses 101 to 118.

124. Computer readable code configured to cause the method of any of clauses 119 to 123 to be performed when the code is run.

125. An integrated circuit definition dataset that, when processed in an integrated circuit manufacturing system, configures the integrated circuit manufacturing system to manufacture a processing unit as stated in any of clauses 101 to 118.

201. A graphics processing unit configured to multiply a sparse matrix and a dense matrix to determine an output matrix, wherein the graphics processing unit comprises:

an execution module configured to execute threads of a workgroup, wherein the threads of the workgroup are allocated to respective sections of the output matrix, wherein each of the sections is a portion of a row of the output matrix; and
a texture cache configured to store portions of rows of the dense matrix, wherein the texture cache is configured to allow access to elements of a group of adjacent elements of a portion of a row of the dense matrix together;
wherein each of the threads of the workgroup is arranged to:

access data representing one or more non-zero elements of a corresponding row of the sparse matrix, wherein a row-position of the corresponding row of the sparse matrix matches a row-position of the portion of the row of the output matrix of the section to which the thread is allocated;

for each of the one or more non-zero elements of the corresponding row of the sparse matrix:

access from the texture cache a portion of a related row of the dense matrix; and
multiply the non-zero element with the portion of the related row of the dense matrix, wherein a row-position of the related row in the dense matrix matches a column-position of the non-zero element in the sparse matrix, and wherein a column-position of the portion of the related row of the dense matrix matches a column-position of the portion of the row of the output matrix of the section to which the thread is allocated; and

sum results of the multiplications to determine the elements of the section of the output matrix to which the thread is allocated.

202. The graphics processing unit of clause 201 wherein the sparse matrix is divided into slices, where each of the slices represents a set of $N$ rows of the sparse matrix, where $N$ is an integer, and wherein the data of the sparse matrix is in a sellpack format comprising:

a string of values and a string of column indices corresponding to the values, wherein the string of values comprises the non-zero elements of the sparse matrix, and
wherein for each of the slices, a section of the string of values comprises the non-zero elements of the slice of the sparse matrix in column-major order, and a section of the string of column indices comprises column indices corresponding to the non-zero elements of the slice of the sparse matrix in column-major order.

203. The graphics processing unit of clause 201 or 202 further comprising a set of one or more caches configured to store data of the sparse matrix.

204. The graphics processing unit of clause 203 wherein sequential threads of the workgroup are arranged to access data representing non-zero elements of the sparse matrix from sequential locations of the set of one or more caches.

205. The graphics processing unit of clause 203 or 204 wherein the texture cache is separate to the set of one or more caches, wherein the graphics processing unit is configured such that data of the sparse matrix is not stored in the texture cache and data of the dense matrix is not stored in the set of one or more caches.

206. The graphics processing unit of any of clauses 201 to 205 wherein the workgroup comprises multiple warps, wherein each of the warps comprises a plurality of the threads allocated to portions of different rows of the output matrix, and
wherein for each of a plurality of the rows of the output matrix, threads of different warps are allocated to respective portions of that row of the output matrix.

207. The graphics processing unit of any of clauses 201 to 206 wherein each of the threads of the workgroup is arranged to, for each of the one or more non-zero elements of the corresponding row of the sparse matrix, multiply the non-zero element with a portion of the related row of the dense matrix using a vectorised operation to multiply the non-zero element with a vector having elements of the portion of the related row of the dense matrix, such that the results of the multiplications are vectors.

208. The graphics processing unit of any of clauses 201 to 207 wherein each of the threads of the workgroup is arranged to perform element-wise addition of the results of the multiplications to sum the results of the multiplications to determine the elements of the section of the output matrix to which the thread is allocated.

209. The graphics processing unit of any of clauses 201 to 208 wherein the sections of the output matrix to which the threads of the workgroup are allocated are non-overlapping and contiguous.

210. The graphics processing unit of any of clauses 201 to 209 wherein multiple threads of the workgroup are allocated to respective portions of the same row of the output matrix.

211. The graphics processing unit of any of clauses 201 to 210 wherein the texture cache is configured to allow random access to groups of adjacent elements of rows of the dense matrix.

212. The graphics processing unit of any of clauses 201 to 211 wherein the execution module comprises a plurality of registers, and
wherein, each of the threads of the workgroup is arranged to, for multiplying each of the one or more non-zero elements of the corresponding row of the sparse matrix with a portion of the related row of the dense matrix, store data representing the non-zero element of the corresponding row of the sparse matrix in a first set of one or more of the registers, and store data representing the portion of the related row of the dense matrix in a second set of one or more of the registers.

213. The graphics processing unit of clause 212 wherein the registers of the execution module are not configured to store all of the data of the dense matrix or all of the data of the sparse matrix at any given time.

214. The graphics processing unit of any of clauses 201 to 213 wherein the sparse matrix comprises a plurality of non-zero elements and a plurality of elements which are zero, wherein the rows and columns of the sparse matrix have been ordered so as to gather the plurality of non-zero elements of the sparse matrix into a set of sub-matrices, the set of sub-matrices having a greater average density of non-zero elements than the sparse matrix,
wherein the rows and columns of the dense matrix and the output matrix have been ordered in accordance with the ordering of the rows and columns of the sparse matrix.

215. The graphics processing unit of clause 214 when dependent upon clause 202 wherein each of the slices of the sparse matrix in the sellpack format corresponds to the rows of a respective one of the sub-matrices.

216. The graphics processing unit of clause 214 or 215 wherein the rows and columns of the sparse matrix have been ordered into a singly-bordered block-diagonal matrix form.

217. The graphics processing unit of any of clauses 214 to 216, wherein the rows and columns of the sparse matrix have been ordered so as to gather the plurality of non-zero elements of the sparse matrix into a set of sub-matrices in dependence on a hypergraph model.

218. The graphics processing unit of any of clauses 201 to 217 wherein the number of threads in the workgroup is equal to the number of threads that can be executed simultaneously on the execution module.

219. A computer-implemented method of multiplying a sparse matrix and a dense matrix on a graphics processing unit to determine an output matrix, wherein the graphics processing unit comprises an execution module and a texture cache, wherein the method comprises:
executing threads of a workgroup on the execution module, wherein the threads of the workgroup are allocated to respective sections of the output matrix, wherein each of the sections is a portion of a row of the output matrix;

wherein, for each of the threads of the workgroup, said executing the thread comprises:

accessing data representing one or more non-zero elements of a corresponding row of the sparse matrix, wherein a row-position of the corresponding row of the sparse matrix matches a row-position of the portion of the row of the output matrix of the section to which the thread is allocated;
for each of the one or more non-zero elements of the corresponding row of the sparse matrix:

accessing from the texture cache a portion of a related row of the dense matrix, wherein the texture cache is configured to allow access to elements of a group of adjacent elements of a portion of a row of the dense matrix together; and
multiplying the non-zero element with the portion of the related row of the dense matrix, wherein a row-position of the related row in the dense matrix matches a column-position of the non-zero element in the sparse matrix, and wherein a column-position of the portion of the related row of the dense matrix matches a column-position of the portion of the row of the output matrix of the section to which the thread is allocated; and

summing results of the multiplications to determine the elements of the section of the output matrix to which the thread is allocated.

220. The method of clause 219 wherein the sparse matrix is divided into slices, where each of the slices represents a set of $N$ rows of the sparse matrix, where $N$ is an integer, and wherein the data of the sparse matrix is in a sellpack format comprising:

a string of values and a string of column indices corresponding to the values, wherein the string of values comprises the non-zero elements of the sparse matrix, and
wherein for each of the slices, a section of the string of values comprises the non-zero elements of the slice of the sparse matrix in column-major order, and a section of the string of column indices comprises column indices corresponding to the non-zero elements of the slice of the sparse matrix in column-major order.

221. The method of clause 220 wherein the sparse matrix comprises a plurality of non-zero elements and a plurality of elements which are zero, wherein the rows and columns of the sparse matrix have been ordered so as to gather the plurality of non-zero elements of the sparse matrix into a set of sub-matrices in dependence on a hypergraph model, the set of sub-matrices having a greater average density of non-zero elements than the sparse matrix,

wherein each of the slices of the sparse matrix in the sellpack format corresponds to the rows of a respective one of the sub-matrices, and
wherein the rows and columns of the dense matrix and the output matrix have been ordered in accordance with the ordering of the rows and columns of the sparse matrix.

222. The method of any of clauses 219 to 221 wherein the graphics processing unit further comprises a set of one or more caches configured to store data of the sparse matrix, wherein the texture cache is separate to the set of one or more caches.

223. A method of manufacturing, using an integrated circuit manufacturing system, a graphics processing unit as stated in any of clauses 201 to 218.

224. Computer readable code configured to cause the method of any of clauses 219 to 223 to be performed when the code is run.

225. An integrated circuit definition dataset that, when processed in an integrated circuit manufacturing system, configures the integrated circuit manufacturing system to manufacture a graphics processing unit as stated in any of clauses 201 to 218.

301. A processing unit configured to multiply a sparse matrix and a dense matrix to determine an output matrix, wherein the processing unit comprises:

an execution module configured to execute threads of a workgroup, wherein the execution module comprises a plurality of registers, wherein the threads of the workgroup are allocated to respective sections of the output matrix, wherein each of the sections is a portion of a row of the output matrix;
wherein each of the threads of the workgroup is arranged to:

access data from a first set of one or more of the registers representing one or more non-zero elements of a corresponding row of the sparse matrix, wherein a row-position of the corresponding row of the sparse matrix matches a row-position of the portion of the row of the output matrix of the section to which the thread is allocated;
for each of the one or more non-zero elements of the corresponding row of the sparse matrix:

> access from a second set of one or more of the registers a portion of a related row of the dense matrix; and multiply the non-zero element with the portion of the related row of the dense matrix, wherein a row-position of the related row in the dense matrix matches a column-position of the non-zero element in the sparse matrix, and wherein a column-position of the portion of the related row of the dense matrix matches a column-position of the portion of the row of the output matrix of the section to which the thread is allocated; and

> sum results of the multiplications to determine the elements of the section of the output matrix to which the thread is allocated.

302. The processing unit of clause 301 wherein the sparse matrix is divided into slices, where each of the slices represents a set of $N$ rows of the sparse matrix, where $N$ is an integer, and wherein the data of the sparse matrix is in a sellpack format comprising:

> a string of values and a string of column indices corresponding to the values, wherein the string of values comprises the non-zero elements of the sparse matrix, and
> wherein for each of the slices, a section of the string of values comprises the non-zero elements of the slice of the sparse matrix in column-major order, and a section of the string of column indices comprises column indices corresponding to the non-zero elements of the slice of the sparse matrix in column-major order.

303. The processing unit of clause 301 or 302 wherein the workgroup comprises multiple warps, wherein each of the warps comprises a plurality of the threads allocated to portions of different rows of the output matrix, and
wherein for each of a plurality of the rows of the output matrix, threads of different warps are allocated to respective portions of that row of the output matrix.

304. The processing unit of any of clauses 301 to 303 wherein each of the threads of the workgroup is arranged to, for each of the one or more non-zero elements of the corresponding row of the sparse matrix, multiply the non-zero element with a portion of the related row of the dense matrix using a vectorised operation to multiply the non-zero element with a vector having elements of the portion of the related row of the dense matrix, such that the results of the multiplications are vectors.

305. The processing unit of any of clauses 301 to 304 wherein each of the threads of the workgroup is arranged to perform element-wise addition of the results of the multiplications to sum the results of the multiplications to determine the elements of the section of the output matrix to which the thread is allocated.

306. The processing unit of any of clauses 301 to 305 wherein the sections of the output matrix to which the threads of the workgroup are allocated are non-overlapping and contiguous.

307. The processing unit of any of clauses 301 to 306 wherein the processing unit is a graphics processing unit.

308. The processing unit of clause 307 wherein the graphics processing unit further comprises a texture cache configured to store portions of rows of the dense matrix, wherein each of the threads of the workgroup is arranged to, for each of the one or more non-zero elements of the corresponding row of the sparse matrix, access from the texture cache said portion of the related row of the dense matrix to be multiplied with the non-zero element,
wherein the texture cache is configured to allow access to elements of a group of adjacent elements of a portion of a row of the dense matrix together.

309. The processing unit of clause 308 wherein the texture cache is configured to allow random access to groups of adjacent elements of rows of the dense matrix.

310. The processing unit of any of clauses 301 to 309 further comprising a set of one or more caches configured to store data of the sparse matrix.

311. The processing unit of clause 310 wherein sequential threads of the workgroup are arranged to access data representing non-zero elements of the sparse matrix from sequential locations of the set of one or more caches.

312. The processing unit of clause 310 or 311 when dependent upon clause 308 wherein the texture cache is separate to the set of one or more caches, wherein the graphics processing unit is configured such that data of the sparse matrix is not stored in the texture cache and data of the dense matrix is not stored in the set of one or more caches.

313. The processing unit of any of clauses 301 to 312 wherein the registers of the execution module are not configured to store all of the data of the dense matrix or all of the data of the sparse matrix at any given time.

314. The processing unit of any of clauses 301 to 313 wherein multiple threads of the workgroup are allocated to respective portions of the same row of the output matrix.

315. The processing unit of any of clauses 301 to 314 wherein the sparse matrix comprises a plurality of non-zero elements and a plurality of elements which are zero, wherein the rows and columns of the sparse matrix have been ordered so as to gather the plurality of non-zero elements of the sparse matrix into a set of sub-matrices, the set of sub-matrices having a greater average density of non-zero elements than the sparse matrix, wherein the rows and columns of the dense matrix and the output matrix have been ordered in accordance with the ordering of the rows and columns of the sparse matrix.

316. The processing unit of clause 315 when dependent upon clause 302 wherein each of the slices of the sparse matrix in the sellpack format corresponds to the rows of a respective one of the sub-matrices.

317. The processing unit of clause 315 or 316 wherein the rows and columns of the sparse matrix have been ordered into a singly-bordered block-diagonal matrix form.

318. The processing unit of any of clauses 315 to 317, wherein the rows and columns of the sparse matrix have been ordered so as to gather the plurality of non-zero elements of the sparse matrix into a set of sub-matrices in dependence on a hypergraph model.

319. The processing unit of any of clauses 301 to 318 wherein the number of threads in the workgroup is equal to the number of threads that can be executed simultaneously on the execution module.

320. A computer-implemented method of multiplying a sparse matrix and a dense matrix on a processing unit to determine an output matrix, wherein the processing unit comprises an execution module which comprises a plurality of registers, wherein the method comprises:
executing threads of a workgroup on the execution module, wherein the threads of the workgroup are allocated to respective sections of the output matrix, wherein each of the sections is a portion of a row of the output matrix;
wherein, for each of the threads of the workgroup, said executing the thread comprises:

accessing data from a first set of one or more of the registers representing one or more non-zero elements of a corresponding row of the sparse matrix, wherein a row-position of the corresponding row of the sparse matrix matches a row-position of the portion of the row of the output matrix of the section to which the thread is allocated;
for each of the one or more non-zero elements of the corresponding row of the sparse matrix:

accessing from a second set of one or more of the registers a portion of a related row of the dense matrix; and
multiplying the non-zero element with the portion of the related row of the dense matrix, wherein a row-position of the related row in the dense matrix matches a column-position of the non-zero element in the sparse matrix, and wherein a column-position of the portion of the related row of the dense matrix matches a column-position of the portion of the row of the output matrix of the section to which the thread is allocated; and

summing results of the multiplications to determine the elements of the section of the output matrix to which the thread is allocated.

321. The method of clause 320 wherein the sparse matrix is divided into slices, where each of the slices represents a set of $N$ rows of the sparse matrix, where $N$ is an integer, and wherein the data of the sparse matrix is in a sellpack format comprising:

a string of values and a string of column indices corresponding to the values, wherein the string of values comprises the non-zero elements of the sparse matrix, and
wherein for each of the slices, a section of the string of values comprises the non-zero elements of the slice of the sparse matrix in column-major order, and a section of the string of column indices comprises column indices corresponding to the non-zero elements of the slice of the sparse matrix in column-major order.

322. The method of clause 321 wherein the sparse matrix comprises a plurality of non-zero elements and a plurality of elements which are zero, wherein the rows and columns of the sparse matrix have been ordered so as to gather the plurality of non-zero elements of the sparse matrix into a set of sub-matrices in dependence on a hypergraph model, the set of sub-matrices having a greater average density of non-zero elements than the sparse matrix,

wherein each of the slices of the sparse matrix in the sellpack format corresponds to the rows of a respective one of the sub-matrices, and wherein the rows and columns of the dense matrix and the output matrix have been ordered in accordance with the ordering of the rows and columns of the sparse matrix.

323. The method of any of clauses 319 to 321 wherein the processing unit is a graphics processing unit which further comprises a texture cache configured to store portions of rows of the dense matrix, wherein the texture cache is separate to the set of one or more caches,

wherein, for each of the threads of the workgroup, said executing the thread further comprises, for each of the one or more non-zero elements of the corresponding row of the sparse matrix, accessing from the texture cache said portion of the related row of the dense matrix to be multiplied with the non-zero element, and wherein the texture cache is configured to allow access to elements of a group of adjacent elements of a portion of a row of the dense matrix together.

324. A method of manufacturing, using an integrated circuit manufacturing system, a processing unit as stated in any of clauses 301 to 319.

325. Computer readable code configured to cause the method of any of clauses 320 to 324 to be performed when the code is run.

326. An integrated circuit definition dataset that, when processed in an integrated circuit manufacturing system, configures the integrated circuit manufacturing system to manufacture a processing unit as stated in any of clauses 301 to 319.

**Claims**

1. A processing unit configured to multiply a sparse matrix and a dense matrix to determine an output matrix, wherein the processing unit comprises:

an execution module configured to execute threads of a workgroup, wherein the threads of the workgroup are allocated to respective sections of the output matrix, wherein each of the sections is a portion of a row of the output matrix; and
a set of one or more caches configured to store data of the sparse matrix;

wherein each of the threads of the workgroup is arranged to:

access data from the set of one or more caches representing one or more non-zero elements of a corresponding row of the sparse matrix, wherein a row-position of the corresponding row of the sparse matrix matches a row-position of the portion of the row of the output matrix of the section to which the thread is allocated;
for each of the one or more non-zero elements of the corresponding row of the sparse matrix, multiply the non-zero element with a portion of a related row of the dense matrix, wherein a row-position of the related row in the dense matrix matches a column-position of the non-zero element in the sparse matrix, and wherein a column-position of the portion of the related row of the dense matrix matches a column-position of the portion of the row of the output matrix of the section to which the thread is allocated; and
sum results of the multiplications to determine the elements of the section of the output matrix to which the thread is allocated;

wherein multiple threads of the workgroup are allocated to respective portions of the same row of the output matrix.

2. The processing unit of claim 1 wherein the sparse matrix is divided into slices, where each of the slices represents a set of $N$ rows of the sparse matrix, where $N$ is an integer, and wherein the data of the sparse matrix is in a sellpack format comprising:

a string of values and a string of column indices corresponding to the values, wherein the string of values comprises the non-zero elements of the sparse matrix, and
wherein for each of the slices, a section of the string of values comprises the non-zero elements of the slice of the sparse matrix in column-major order, and a section of the string of column indices comprises column indices corresponding to the non-zero elements of the slice of the sparse matrix in column-major order.

3. The processing unit of claim 1 or 2 wherein sequential threads of the workgroup are arranged to access data representing non-zero elements of the sparse matrix from sequential locations of the set of one or more caches.

4. The processing unit of any preceding claim wherein the workgroup comprises multiple warps, wherein each of the warps comprises a plurality of the threads allocated to portions of different rows of the output matrix, and

wherein for each of a plurality of the rows of the output matrix, threads of different warps are allocated to respective portions of that row of the output matrix.

5. The processing unit of any preceding claim wherein each of the threads of the workgroup is arranged to, for each of the one or more non-zero elements of the corresponding row of the sparse matrix, multiply the non-zero element with a portion of the related row of the dense matrix using a vectorised operation to multiply the non-zero element with a vector having elements of the portion of the related row of the dense matrix, such that the results of the multiplications are vectors.

6. The processing unit of any preceding claim wherein each of the threads of the workgroup is arranged to perform element-wise addition of the results of the multiplications to sum the results of the multiplications to determine the elements of the section of the output matrix to which the thread is allocated.

7. The processing unit of any preceding claim wherein the processing unit is a graphics processing unit, wherein the graphics processing unit further comprises a texture cache configured to store portions of rows of the dense matrix, wherein each of the threads of the workgroup is arranged to, for each of the one or more non-zero elements of the corresponding row of the sparse matrix, access from the texture cache said portion of the related row of the dense matrix to be multiplied with the non-zero element,

wherein the texture cache is configured to allow access to elements of a group of adjacent elements of a portion of a row of the dense matrix together,

optionally wherein the texture cache is configured to allow random access to groups of adjacent elements of rows of the dense matrix.

8. The processing unit of claim 7 wherein the texture cache is separate to the set of one or more caches, wherein the graphics processing unit is configured such that data of the sparse matrix is not stored in the texture cache and data of the dense matrix is not stored in the set of one or more caches.

9. The processing unit of any preceding claim wherein the execution module comprises a plurality of registers, and

wherein, each of the threads of the workgroup is arranged to, for multiplying each of the one or more non-zero elements of the corresponding row of the sparse matrix with a portion of the related row of the dense matrix, store data representing the non-zero element of the corresponding row of the sparse matrix in a first set of one or more of the registers, and store data representing the portion of the related row of the dense matrix in a second set of one or more of the registers,

optionally wherein the registers of the execution module are not configured to store all of the data of the dense matrix or all of the data of the sparse matrix at any given time.

10. A computer-implemented method of multiplying a sparse matrix and a dense matrix on a processing unit to determine an output matrix, wherein the processing unit comprises an execution module and a cache, wherein the method comprises:

executing threads of a workgroup on the execution module, wherein the threads of the workgroup are allocated to respective sections of the output matrix, wherein each of the sections is a portion of a row of the output matrix;

wherein, for each of the threads of the workgroup, said executing the thread comprises:

accessing data representing one or more non-zero elements of a corresponding row of the sparse matrix, wherein a row-position of the corresponding row of the sparse matrix matches a row-position of the portion of the row of the output matrix of the section to which the thread is allocated, wherein the sparse matrix comprises a plurality of non-zero elements and a plurality of elements which are zero, wherein the rows and columns of the sparse matrix are ordered so as to gather the plurality of non-zero elements of the sparse matrix into a set of sub-matrices, the set of sub-matrices having a greater average density of non-zero elements than the sparse matrix, wherein the rows and columns of the dense matrix and the output matrix are ordered in accordance with the ordering of the rows and columns of the sparse matrix;

for each of the one or more non-zero elements of the corresponding row of the sparse matrix:

accessing from the cache a portion of a related row of the dense matrix; and multiplying the non-zero element with the portion of the related row of the dense matrix, wherein a row-position of the related row in the dense matrix matches a column-position of the non-zero element in the sparse matrix, and wherein a column-position of the portion of the related row of the dense matrix matches a column-position of the portion of the row of the output matrix of the section to which the thread is allocated; and

summing results of the multiplications to determine the elements of the section of the output matrix to which the thread is allocated.

11. The method of claim 10 wherein the sparse matrix is divided into slices, where each of the slices represents a set of $N$ rows of the sparse matrix, where $N$ is an integer, and wherein the data of the sparse matrix is in a sellpack format comprising:

a string of values and a string of column indices corresponding to the values, wherein the string of values comprises the non-zero elements of the sparse matrix, and
wherein for each of the slices, a section of the string of values comprises the non-zero elements of the slice of the sparse matrix in column-major order, and a section of the string of column indices comprises column indices corresponding to the non-zero elements of the slice of the sparse matrix in column-major order, wherein each of the slices of the sparse matrix in the sellpack format corresponds to the rows of a respective one of the sub-matrices.

12. The method of claim 11 wherein the data of the sparse matrix in the sellpack format further comprises a set of slice offsets to indicate the positions of the sections within the string of values and within the string of column indices that relate to the respective slices.

13. The method of claim 10 to 12 wherein the rows and columns of the sparse matrix are ordered into a singly-bordered block-diagonal matrix form.

14. The method of any of claims 10 to 13 wherein the rows and columns of the sparse matrix are ordered so as to gather the plurality of non-zero elements of the sparse matrix into a set of sub-matrices in dependence on a hypergraph model.

15. The method of any of claims 10 to 14 wherein multiple threads of the workgroup are allocated to respective portions of the same row of the output matrix, wherein the processing unit is a graphics processing unit, wherein the cache is a texture cache configured to store portions of rows of the dense matrix, and wherein the texture cache is configured to allow access to elements of a group of adjacent elements of a portion of a row of the dense matrix together.

Processing system

Processing unit

Execution module

Cache(s)

Memory

100

106

102

108

104

**FIGURE 1**

202

204

$214_1$  $214_2$  206

$210_1$  $210_2$  208

212

Y

=

W

x

X

**FIGURE 2**

208

302₁ 212 302₂

304₁

304₂

= × 

Y W X
202 204 **FIGURE 3** 206

---

For each thread of the workgroup

Access data representing the non-zero elements of the corresponding row of the sparse matrix, W — S402

For each non-zero element

Access a portion of the related row of the dense matrix, X — S404

Multiply the non-zero element of the corresponding row of the sparse matrix with the portion of the related row of the dense matrix — S406

Sum the results of the multiplications to determine elements of the section of the output matrix to which the thread is allocated — S408

**FIGURE 4**  Output the output matrix, Y, for use in the processing unit — S410

FIGURE 5

FIGURE 6

FIGURE 7A

FIGURE 7B

FIGURE 7C

FIGURE 7D

FIGURE 7E

**FIGURE 8**

**FIGURE 9**

Sparse matrix

**FIGURE 10A**

**FIGURE 10B**

Permuted and partitioned sparse matrix

**FIGURE 10C**

**FIGURE 11A**

**FIGURE 11B**

**FIGURE 11C**

**FIGURE 11D**

**FIGURE 12**

**FIGURE 13**

Europäisches
Patentamt

European
Patent Office

Office européen
des brevets

# EUROPEAN SEARCH REPORT

**Application Number**

EP 25 21 8278

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/146635 A1 (GOOGLE LLC [US]) 22 July 2021 (2021-07-22) * page 1, line 27 - line 29 * * page 4, line 16 - line 23 * * page 4, line 24 - line 30 * * page 11, line 13 - line 16 * * page 11, line 17 - line 28 * * page 11, line 30 - page 12, line 3 * * page 12, line 11 - line 19 * * page 12, line 19 - line 26 * * page 12, line 26 - page 13, line 5 * * page 13, line 31 - page 14, line 7 * * page 1, line 22 - line 26 * * page 21, line 20 - line 29 * * page 12, line 3 - line 11 * ----- | 1-15 | INV. G06F17/16 G06N3/063 |
| A | WU TAO ET AL: "An efficient sparse-dense matrix multiplication on a multicore system", 2017 IEEE 17TH INTERNATIONAL CONFERENCE ON COMMUNICATION TECHNOLOGY (ICCT) IEEE, 27 October 2017 (2017-10-27), pages 1880-1883, XP033340220, DOI: 10.1109/ICCT.2017.8359956 [retrieved on 2018-05-15] * abstract; figures 3,4, 5(a) * * page 1882, column 1 - column 2 * * page 1881, column 1 * ----- -/-- | 1-15 | TECHNICAL FIELDS SEARCHED (IPC) G06F G06E G06N |

The present search report has been drawn up for all claims

| Place of search | Date of completion of the search | Examiner |
|---|---|---|
| The Hague | 8 May 2026 | Karaliolios, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| Europäisches Patentamt European Patent Office Office européen des brevets | **EUROPEAN SEARCH REPORT** | Application Number EP 25 21 8278 |
|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SHIMING XU ET AL: "Sparse Matrix-Vector Multiplication Optimizations based on Matrix Bandwidth Reduction using NVIDIA CUDA", DISTRIBUTED COMPUTING AND APPLICATIONS TO BUSINESS ENGINEERING AND SCIENCE (DCABES), 2010 NINTH INTERNATIONAL SYMPOSIUM ON IEEE, PISCATAWAY, NJ, USA, 10 August 2010 (2010-08-10), pages 609-614, XP031752765, DOI: 10.1109/DCABES.2010.162 ISBN: 9781424475391 * page 610, column 1 * ----- | 1-15 | |
| A | KUKELOVA ZUZANA ET AL: "Singly-Bordered Block-Diagonal Form for Minimal Problem Solvers", 16 April 2015 (2015-04-16), ADVANCES IN VISUAL COMPUTING : 16TH INTERNATIONAL SYMPOSIUM, ISVC 2021, VIRTUAL EVENT, OCTOBER 4-6, 2021, PROCEEDINGS, PART II; [LECTURE NOTES IN COMPUTER SCIENCE, LECTURE NOTES IN COMPUTER SCIENCE; LECT.NOTES COMPUTER] SPRINGER INTERNATIONAL PUBLISH, XP047653666, ISSN: 0302-9743 ISBN: 9783030904364 [retrieved on 2015-04-16] * abstract, sec. 4 * ----- -/-- | 1-15 | TECHNICAL FIELDS SEARCHED (IPC) |

The present search report has been drawn up for all claims

| Place of search | Date of completion of the search | Examiner |
|---|---|---|
| The Hague | 8 May 2026 | Karaliolios, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 3

| | Europäisches Patentamt European Patent Office Office européen des brevets | **EUROPEAN SEARCH REPORT** | Application Number EP 25 21 8278 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NAHER JANNATUN ET AL: "Using Machine Learning to Estimate Utilization and Throughput for OpenCL-Based SpMV Implementation on an FPGA", 2020 SOUTHEASTCON IEEE, 28 March 2020 (2020-03-28), pages 1-8, XP033856940, DOI: 10.1109/SOUTHEASTCON44009.2020.9249711 [retrieved on 2020-11-04] * figure 5 * | 1-15 | |

TECHNICAL FIELDS SEARCHED (IPC)

The present search report has been drawn up for all claims

| Place of search | Date of completion of the search | Examiner |
|---|---|---|
| The Hague | 8 May 2026 | Karaliolios, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 3 of 3

EP 4 764 902 A1

## ANNEX TO THE EUROPEAN SEARCH REPORT
## ON EUROPEAN PATENT APPLICATION NO.

EP 25 21 8278

This annex lists the patent family members relating to the patent documents cited in the above-mentioned European search report.
The members are as contained in the European Patent Office EDP file on
The European Patent Office is in no way liable for these particulars which are merely given for the purpose of information.

08-05-2026

| Patent document cited in search report | Publication date | Patent family member(s) | Publication date |
|---|---|---|---|
| WO 2021146635 A1 | 22-07-2021 | CN 114945917 A | 26-08-2022 |
| | | EP 4073667 A1 | 19-10-2022 |
| | | US 2023041163 A1 | 09-02-2023 |
| | | WO 2021146635 A1 | 22-07-2021 |

EPO FORM P0459

For more details about this annex : see Official Journal of the European Patent Office, No. 12/82

50

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2417598 A
- GB 2417599 A
- GB 2512577 A
- GB 2512579 A